# EUROPÄISCHE PATENTANMELDUNG

(11) **EP 4 847 341 A1**
(43) Veröffentlichungstag der Anmeldung: **02.12.2026**
(21) Anmeldenummer: 25179500.1
(22) Anmeldetag: 28.05.2025
(51) Int. Cl.: B61L 27/70, G06F 11/16

(54) **VERFAHREN ZUM REDUNDANTEN ERZEUGEN UND ÜBERTRAGEN EINER NACHRICHT**

(71) Anmelder: Siemens Mobility GmbH, 80997 München (DE)
(72) Erfinder: Barghorn, Daniel, 38100 Braunschweig (DE); Bolz, Matthias, 38106 Braunschweig (DE); Eckelmann-Wendt, Uwe, 38302 Wolfenbüttel (DE); Gerken, Stefan, 38116 Braunschweig (DE); Schallenberg, Andreas, 31224 Peine (DE); Seemann, Markus, 38102 Braunschweig (DE); de Stefano, Ernesto, 38126 Braunschweig (DE)
(74) Vertreter: Siemens Patent Attorneys

(57) **Zusammenfassung**

Von der Erfindung ist ein Verfahren zum redundanten Erzeugen und Übertragen einer Nachricht (NR) umfasst. Erfindungsgemäß ist vorgesehen, dass die Nachricht (NR) mit einem Operator (*) einer bijektiven Abbildung verschlüsselt wird, wobei in einer ersten replizierenden Recheninstanz (RP1) und einer zweiten replizierenden Recheninstanz (RP2) jeweils ein anderer Verschlüsselungsoperand verwendet wird, wobei die jeweils andere replizierende Recheninstanz keinen Zugriff auf den in der betreffenden replizierenden Recheninstanz verwendeten Verschlüsselungsoperanden hat. Es ist vorgesehen, dass die erste replizierende Recheninstanz (RP1) und die zweite replizierende Recheninstanz (RP2) jeweils die unverschlüsselte Nachricht (NR) unter Verwendung des in der betreffenden replizierenden Recheninstanz verfügbaren Verschlüsselungsoperanden verschlüsseln und die verschlüsselte Nachricht (NR) enthaltende Prüfdaten (PD) an die jeweils andere replizierende Recheninstanz übergeben und dann die erste replizierende Recheninstanz (RP1) und die zweite replizierende Recheninstanz (RP2) jeweils die empfangene verschlüsselte Nachricht (NR) unter Verwendung des in der betreffenden replizierenden Recheninstanz verfügbaren Verschlüsselungsoperanden ein weiteres Mal verschlüsseln und zumindest eine der beiden replizierenden Recheninstanzen die doppelt verschlüsselte Nachricht (NR) enthaltende Prüfdaten (PD) an die Empfänger-Recheninstanz (RIE) überträgt. Zuletzt ist vorgesehen, dass in der Empfänger-Recheninstanz (RIE) die doppelt verschlüsselte Nachricht (NR) unter Verwendung eines Entschlüsselungsoperanden, der einen inversen Verschlüsselungsoperanden zu einem Verknüpfungsergebnis aus den beiden verwendeten Verschlüsselungsoperanden bildet, entschlüsselt wird. Ferner ist von der Erfindung Bahnanlage mit einer Rechenumgebung (RU) umfasst. Ferner ist von der Erfindung ein Computerprogrammprodukt, enthaltend Programmbefehle, umfasst. Ferner ist von der Erfindung ein Computerlesbares Speichermedium, enthaltend Daten, umfasst.

## Beschreibung

### Technisches Gebiet

Von der Erfindung ist ein Verfahren zum redundanten Erzeugen und Übertragen einer Nachricht umfasst. Ferner ist von der Erfindung eine Bahnanlage mit einer Rechenumgebung umfasst. Ferner ist von der Erfindung ein Computerprogrammprodukt, enthaltend Programmbefehle, umfasst. Ferner ist von der Erfindung ein Computerlesbares Speichermedium, enthaltend Daten, umfasst.

### Technischer Hintergrund

Bahnautomatisierungssysteme, d.h. im Bereich der Bahnautomatisierung eingesetzte Kommunikationsnetze beziehungsweise Steuerungssysteme, müssen im Rahmen ihres Betriebs hohe Anforderungen an die korrekte und zuverlässige Funktion der Komponenten sowie Übertragung von Nachrichten, etwa in Form von Steuerungsinformationen, erfüllen. Ursache hierfür ist, dass die entsprechenden Abläufe (Rechenoperationen, Datenspeicherung Nachrichtenübertragungen) unmittelbare Auswirkungen auf die Betriebssicherheit, die auch als "Safety" bezeichnet wird, haben. Entsprechende Bahnautomatisierungssysteme bestehen üblicherweise aus zumindest einer Kontrolleinheit, die eine Vielzahl von Endgeräten steuert oder von diesen Informationen abfragt und hierzu ein entsprechendes Kommunikationsnetz verwendet. Diese Anforderungen gelten selbstverständlich auch für andere sicherheitsrelevante Anwendungen. Eine Eigenheit von Bahnautomatisierungssystemen ist darüber hinaus, dass sie üblicherweise eine große Anzahl von Geräten beziehungsweise Einheiten umfassen sowie häufig geografisch weit verteilt sind, sodass sich ein verteiltes System mit Komponenten an unterschiedlichen Orten ergibt.

In dem Dokument EP 3676991 A1 ist beispielsweise beschrieben, dass zumindest die Übertragung von Nachrichten beim Betrieb von Bahnautomatisierungssystemen nach einem Publish-Subscribe-Verfahren durchgeführt werden kann, um eine betriebssichere Übertragungstechnik anzubieten, die eine höhere Flexibilität hinsichtlich Konfiguration und Skalierbarkeit gewährleistet.

Um sicherheitsrelevante Rechenumgebungen abzusichern, ist es außerdem bekannt, Rechenergebnisse (in Form von einer Vielzahl von Nachrichten) redundant zu erzeugen. Läuft die Applikation zwecks Replikation von Daten dann parallel in mehreren Recheninstanzen ab, kann durch ein Voting in an sich bekannter Weise festgestellt werden, ob Fehler bei der Berechnung auftreten.

Gemäß der WO 2014/00924382 ist ein Verfahren und ein Rechner beschrieben, welches/welcher einen Prüfalgorithmus für die Verarbeitung von Applikationen in der durch den Rechner gebildeten Rechenumgebung aufweist. Auf dem Rechner sind Applikationsprogramme installiert, die redundant ausgeführt werden, sodass der Prüfalgorithmus eine Möglichkeit hat, durch einen Vergleich der Berechnungsergebnisse Fehler aufzudecken (wie erwähnt auch Voting genannt).

Gemäß der WO 2017/167526 A1 ist beschrieben, dass auch ein Voting von Nachrichten redundant ablaufen kann. Dabei muss allerdings sichergestellt werden, dass das Voting tatsächlich mehrfach durchgeführt wird. Dies kann durch eine Kodierung der gewohnten Nachrichten mit sogenannten verketteten Signaturen erfolgen, wobei diese durch Teilschlüssel vorgenommen wird, die jeweils nur in einem der redundanten Voter zur Verfügung stehen. Eine Decodierung der gevoteten Nachrichten mittels eines öffentlichen Schlüssels gelingt dann nur, wenn die betreffende Nachricht durch jeden der zum Einsatz kommenden Voter überprüft wurde, so dass die Verknüpfung aller Teilschlüssel den privaten Schlüssel ergibt, der durch den öffentlichen Schlüssel decodiert werden kann. Mit anderen Worten gelingt eine Dekodierung nur, wenn durch ein mehrfaches Voting die Richtigkeit des erzielten Ergebnisses (verkörpert durch eine oder mehrere Nachrichten) verifiziert wurde. Hierbei handelt es sich um ein NooN-System (N entspricht hier der Anzahl von Voter, hierzu im Folgenden noch mehr).

Gemäß der WO 2017/045824 A1 können Prüfdaten in einem ersten Kommunikationspartner, beispielsweise einer Sender-Recheninstanz, für Nachrichten durch eine Funktion codiert werden, wobei zu dieser Funktion eine Umkehrfunktion existiert, mit der die Prüfdaten decodiert werden können. Zu diesem Zweck wird eine bijektive Abbildung verwendet. Mit dem Verfahren wird sichergestellt, dass der zweite Kommunikationspartner, beispielsweise eine Empfänger-Recheninstanz, nicht fälschlicherweise die richtige Prüfsumme berechnet, obwohl die zu prüfende Nachricht fehlerhaft ist.

Das genannte Voting wird meist mit Hardwarekomponenten durchgeführt, die die Funktionalität des Votings übernehmen. Dabei können die Hardwarekomponenten datentechnisch, vorzugsweise physisch voneinander getrennt betrieben werden, wenn mehrere Voter redundant verwendet werden.

Aus dem erläuterten Stand der Technik ergibt sich das Problem, dass als Hardwarekomponenten ausgeführte Voter jeweils für den betreffenden Anwendungsfall konzipiert werden müssen, weswegen es sich üblicherweise um Sonderanfertigungen mit geringen Stückzahlen handelt. Dies ist mit einem erhöhten Aufwand an Entwicklung und Herstellung verbunden. Die Programmierung der Funktionalität eines Voters als Software (vorzugsweise auf Standardrechnern, auch als commercial-of-the-shelf, kurz COTS Rechner genannt) birgt jedoch die Gefahr, dass Datenfehler bei der Ausführung betreffender Programme zum Voting mit einer höheren Wahrscheinlichkeit verbunden sind, dass auftretende Fehler nicht erkannt werden. Insbesondere für sicherheitsrelevante Anwendungen kann dies bedeuten, dass ein als Software realisierter Voter das geforderte Anforderungsprofil hinsichtlich Funktionssicherheit nicht erfüllt und daher nicht zur Verwendung zugelassen wird.

Die Funktionalität des Votings ist nur ein Beispiel für eine sicherheitsrelevante Anwendung. Die getroffenen Aussagen gelten selbstverständlich auch für andere sicherheitsrelevante Applikationen wie zum Beispiel die Applikation einer Synchronisierung redundant ablaufender Applikationsprogramme auf unterschiedlichen Recheninstanzen mit eigenen Taktgebern.

Die Anforderungen an die Zertifizierung sicherheitsrelevanter Anwendungen beispielsweise in der Bahntechnik sind sehr hoch. Gemäß der internationalen Norm IEC 61508 beziehungsweise spezifisch für den Bahnbereich gemäß der europäischen Norm EN 50129 werden für Sicherheitsfunktionen vier Sicherheits-Integritätslevel oder Englisch Safety Integrity Level (SIL) beziehungsweise Sicherheits-Anforderungsstufen für die geforderte funktionale Sicherheit (Safety) unterschieden. Hierbei stellt der Sicherheits-Integritätslevel 4 die höchste und der Sicherheits-Integritätslevel 1 die niedrigste Stufe der Sicherheits-Integrität dar. Der jeweilige Sicherheits-Integritätslevel beeinflusst das Vertrauensintervall eines Messwertes dahingehend, dass das Vertrauensintervall umso kleiner ist, je höher der Sicherheits-Integritätslevel ist, der seitens der jeweiligen Vorrichtung zu erfüllen ist. Die Dimension der funktionalen Sicherheit der verschiedenen Sicherheits-Integritätslevel lässt sich anschaulich mit der zu erwartenden Häufigkeit eines Ausfalls des sicherheitsrelevanten Systems MTBF (Mean Time Between Failures) beschreiben, wobei dies in Jahren (a) angegeben wird. Diese liegt bei SIL-1 im Bereich von 10 ... 100 a, bei SIL-2 im Bereich von 100 ... 1000 a, bei SIL-3 im Bereich von 1000 ... 10000 a, und bei SIL-4 im Bereich von 10000 ... 100000 a.

### Zusammenfassung der Erfindung

Die Aufgabe der Erfindung besteht darin, die beschriebenen Probleme im Stand der Technik zu beheben. Insbesondere ist es Aufgabe, ein Verfahren zum redundanten Durchführen von Rechenoperationen anzugeben, bei dem sichergestellt ist, dass Berechnungsergebnisse aus diesen Rechenoperationen (beispielsweise in einer Empfänger-Recheninstanz) nur verwendet werden können, wenn die redundanten Rechenoperationen auch alle durchgeführt wurden. Weiterhin ist es Aufgabe der Erfindung, eine Bahnanlage, ein spurgeführtes Fahzeug, ein Computerprogrammprodukt und ein computerlesbares Speichermedium anzugeben, mit dem das verbesserte Verfahren durchführbar ist.

Beschrieben wird gemäß einem ersten Aspekt der Erfindung ein Verfahren zum redundanten Erzeugen und Übertragen einer Nachricht, bei dem
a) die Nachricht nach dem redundanten Erzeugen durch mindestens eine erste replizierende Recheninstanz und eine zweite replizierende Recheninstanz von einer Sender-Recheninstanz zumindest teilweise verschlüsselt an eine Empfänger-Recheninstanz übergeben wird,
b) die Nachricht in der Empfänger-Recheninstanz entschlüsselt wird.

Replizierende Recheninstanzen im Sinne dieser Erfindungsbeschreibung erzeugen eine Nachricht jeweils unabhängig voneinander redundant. Der Begriff Replizieren ist somit im Sinne der Datenverarbeitung zu verstehen, also als mehrfaches Erzeugen von Applikationsdaten zu verstehen. Replizierende Recheninstanzen können in rechnergestützten Prozessen immer dann zur Anwendung kommen, wenn die redundante Erzeugung eines Rechenergebnisses erforderlich ist. Im Folgenden wird anhand von Beispielen erläutert, das dies in einer Rechenumgebung sogar parallel in verschiedenen Applikationen durchgeführt werden kann.

Damit die Ausführung der Applikationsprogramme redundant ist, arbeiten die replizierenden Recheninstanzen unabhängig voneinander. Damit ist gemeint, dass die ablaufenden Prozesse zur redundanten Ausführung des betreffenden Applikationsprogramms in den Recheninstanzen sich nicht gegenseitig beeinflussen. Vorzugsweise greifen replizierende Recheninstanzen auf jeweils reservierte Speicherbereiche einer Speichereinheit oder mehrerer Speichereinheiten zu. Vorzugsweise tauschen die replizierenden Recheninstanzen, die ein Applikationsprogramm redundant ausführen, zum Zwecke der Ausführung des betreffenden Applikationsprogramms somit keine Nachrichten aus.

Im Zusammenhang mit dieser Erfindungsbeschreibung wird zwischen replizierenden Recheninstanzen und allgemein Recheninstanzen unterschieden. Replizierende Recheninstanzen bilden dabei in jedem Fall immer mit anderen gleichrangigen replizierenden Recheninstanzen eine Redundanzgruppe. Recheninstanzen im Allgemeinen können beliebige Aufgaben übernehmen und müssen nicht notwendigerweise redundant rechnen (wobei letzteres auch nicht ausgeschlossen ist). Insbesondere können Redundanzgruppen replizierende Recheninstanzen zu einer (übergreifenden) Recheninstanz zusammengefasst werden.

Rechnergestützt oder computerimplementiert ist eine Vorrichtung, wenn diese eine Rechenumgebung aufweist, oder ein Verfahren, wenn eine Rechenumgebung mindestens einen Verfahrensschritt des Verfahrens ausführt.

Eine Rechenumgebung ist eine IT-Infrastruktur, bestehend aus Funktionskomponenten wie Prozessoren, Speichereinheiten, Programmen und aus mit den Programmen zu verarbeitenden Daten, die zur Ausführung mindestens einer Applikation, die eine Aufgabe zu erfüllen hat, verwendet werden. Weitere Funktionskomponenten können aus Sensoren und Aktuatoren bestehen, welche eine Interaktion der Rechenumgebung mit der Außenwelt ermöglichen. Die IT-Infrastruktur kann auch als Netzwerk der genannten Funktionskomponenten organisiert sein.

Eine Cloud (auch als Rechnerwolke oder Datenwolke bezeichnet) ist eine Rechenumgebung für ein sog. Cloud-Computing. Gemeint ist eine IT-Infrastruktur, welche über Schnittstellen eines Netzwerks wie dem Internet verfügbar gemacht wird. Sie beinhaltet in der Regel Speicherplatz, Rechenleistung oder Software als Dienstleistung, ohne dass diese auf einer die Cloud nutzenden Recheninstanz installiert sein müssen. Die im Rahmen des Cloud-Computings angebotenen Dienstleistungen umfassen das gesamte Spektrum der Informationstechnik und beinhalten unter anderem die IT-Infrastruktur, Plattformen, Software und Rechenleistung, wobei der Cloud-Anbieter die angebotenen Ressourcen bedarfsgerecht an die Cloud-Nutzer verteilt, mit dem Ziel, die Ressourcen damit optimal auszuschöpfen.

Da in der Bahntechnik hohe Sicherheitsstandards hinsichtlich Funktion (Betriebssicherheit, Safety) sowie Angreifbarkeit (Übertragungssicherheit, Security) computerimplementierter Lösungen gelten, sind die Funktionalitäten einer Cloud, die in der Bahntechnik zum Einsatz kommt, hinsichtlich ihrer geteilten Verfügbarkeit üblicherweise begrenzt. Insbesondere, was den Zugriff eines potenziell unbegrenzten Kreises von Cloud-Nutzern angeht, sind daher Restriktionen erforderlich. Aber auch, was die Teilung von Rechenressourcen durch verschiedene Recheninstanzen angeht, muss mit Blick auf eine erforderliche Redundanz ein Zugriff begrenzt werden. Eine Technologie, die diese Restriktionen für die Bahntechnik berücksichtigt, wird im Zusammenhang mit dieser Erfindung auch als private Cloud bezeichnet, auch wenn eine private Cloud die mit Cloudtechnologie verbundenen technischen Merkmale nur eingeschränkt erfüllt.

Recheninstanzen bilden innerhalb einer Rechenumgebung funktionale Einheiten aus, die Applikationen (gegeben beispielsweise durch eine Anzahl von Programmmodulen) zugeordnet werden können und diese ausführen können. Diese funktionalen Einheiten bilden bei der Ausführung der Applikation physikalisch (beispielsweise Computer, Prozessor) und/oder virtuell (beispielsweise Programmmodul) ein sich geschlossene Systeme.

Computer sind aus mehreren Funktionskomponenten bestehende elektronische Geräte mit Datenverarbeitungseigenschaften. Computer können beispielsweise Clients, Server, Handheld-Computer, Kommunikationsgeräte und andere elektronische Geräte zur Datenverarbeitung sein, die Prozessoren und Speichereinheiten aufweisen können und über Schnittstellen auch zu einem Netzwerk zusammengeschlossen sein können.

Prozessoren können beispielsweise Wandler, Sensoren zur Erzeugung von Messsignalen oder elektronische Schaltungen sein. Bei einem Prozessor kann es sich um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen und Daten handeln. Auch kann unter einem Prozessor ein virtualisierter Prozessor oder eine Soft-CPU verstanden werden.

Speichereinheiten können auf computerlesbaren Speichern in Form von Arbeitsspeichern (engl. Random-Access Memory, RAM) oder Datenspeichern (Festplatte oder Datenträger) ausgeführt sein.

Programmmodule sind einzelne Software-Funktionseinheiten, die einen erfindungsgemäßen Programmablauf von Verfahrensschritten ermöglichen. Diese Software-Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Schnittstellen können hardwaretechnisch, beispielsweise kabelgebunden oder als Funkverbindung, oder softwaretechnisch, beispielsweise als Interaktion zwischen einzelnen Programmmodulen eines oder mehrerer Computerprogramme, realisiert sein und dienen einem Austausch von Daten vorzugsweise in Form von digitalen Datensätzen oder analogen Signalen.

Zur Vermeidung von Missverständnissen sei an dieser Stelle angemerkt, dass einzelne Anspruchsmerkmale mit kleinen lateinischen Buchstaben durchnummeriert werden, ohne dass dabei Rücksicht auf die Anspruchsnummerierung genommen wird. Dies bedeutet, dass jeder Buchstabe im gesamten Anspruchssatz nur einmal vorkommt, was eine eindeutige Adressierung der betreffenden Anspruchsmerkmale ohne Nennung der Anspruchsnummer ermöglicht. Deswegen kommt der Reihenfolge der Buchstaben jedoch keine Bedeutung zu.

Erfindungsgemäß ist vorgesehen, dass
c) die Nachricht mit einem Operator einer bijektiven Abbildung verschlüsselt wird, wobei zum Verschlüsseln Verschlüsselungsoperanden verwendet werden,
d) in der ersten replizierenden Recheninstanz und der zweiten replizierenden Recheninstanz jeweils ein anderer Verschlüsselungsoperand verwendet wird, wobei die jeweils andere replizierende Recheninstanz keinen Zugriff auf den in der betreffenden replizierenden Recheninstanz verwendeten Verschlüsselungsoperanden hat,
e) die erste replizierende Recheninstanz und die zweite replizierende Recheninstanz jeweils die unverschlüsselte Nachricht unter Verwendung des in der betreffenden replizierenden Recheninstanz verfügbaren Verschlüsselungsoperanden verschlüsseln und die verschlüsselte Nachricht beschreibende Prüfdaten an die jeweils andere replizierende Recheninstanz übergeben,
f) die erste replizierende Recheninstanz und die zweite replizierende Recheninstanz jeweils die empfangenen verschlüsselten Prüfdaten unter Verwendung des in der betreffenden replizierenden Recheninstanz verfügbaren Verschlüsselungsoperanden ein weiteres Mal verschlüsseln und zumindest eine der beiden replizierenden Recheninstanzen die doppelt verschlüsselten Prüfdaten an die Empfänger-Recheninstanz überträgt,
g) in der Empfänger-Recheninstanz gemäß Merkmal b) die doppelt verschlüsselten Prüfdaten unter Verwendung eines gemeinsamen Verschlüsselungsoperanden, der einen inversen Verschlüsselungsoperanden zu einem Verknüpfungsergebnis aus den beiden verwendeten Verschlüsselungsoperanden bildet, entschlüsselt werden.

Die erste und die zweite (sowie weitere Recheninstanzen, hierzu im Folgenden noch mehr) sind gleichberechtigt. Dies bedeutet das die Reihenfolge, in der die erste und die zweite Recheninstanz durchlaufen werden, keinen Einfluss auf das an die Recheninstanz zum Empfangen übergebene Ergebnis in Form der übertragenen Nachricht hat.

Als Nachricht im Sinne der Erfindungsbeschreibung wird immer ein Dateninhalt verstanden. Demgegenüber wird dessen physikalische Verkörperung als Datensatz bezeichnet. Anders gesagt kann ein und dieselbe Nachricht beispielsweise in zwei Speichereinheiten jeweils als Datensatz abgespeichert werden (hierzu im Folgenden noch mehr). Die Nachricht kann beispielsweise als Applikationsdaten in einem Applikationsdatensatz gespeichert sein. Wird ein Applikationsprogramm redundant durchgeführt, wird somit die Nachricht durch mehrere redundante Applikationsdatensätze verkörpert. Des Weiteren können in dem Applikationsdatensatz auch Prüfdaten gespeichert sein.

Die Verwendung von zwei oder mehr assoziativ vertauschbaren Operatoren in der Abbildung von Quell- zur Zielmenge bei der bijektiven Abbildung stellt sicher, dass unabhängig davon, ob die Prüfdaten erst durch die erste replizierende Recheninstanz und dann durch die zweite replizierende Recheninstanz oder andersherum mithilfe der Operanden verschlüsselt werden, eine Entschlüsselung erfolgreich ist. Dies gilt entsprechend auch für mehr als zwei replizierende Recheninstanzen (hierzu im Folgenden noch mehr). Mit anderen Worten wirkt der Operator assoziativ auf die verwendeten Operanden der bijektiven Abbildung zur Verschlüsselung. Dies kann am Beispiel der Verwendung von zwei replizierenden Recheninstanzen, also der ersten und zweiten replizierenden Recheninstanz kurz auch wie folgt zum Ausdruck gebracht werden.

Erfindungsgemäß wird ein privater Schlüssel als Operand a in zwei Teilschlüssel als Verschlüsselungsoperanden a_1 und a_2 (auch mehr Verschlüsselungsoperanden sind möglich, aber zu Illustrationszwecken werden hier zwei verwendet) aufgeteilt und auf Applikationsdaten AD angewendet mit $AD = AD * a * a _ inv = = AD * a _ 1 * a _ 2 * a _ inv$ (1).

Diese Beziehung wird bei dem Verfahren dann bei der Erzeugung von Ausgaben ausgenutzt, was eine das Verfahren nutzende Anwendung intrinsisch sicher (im Sinne von Funktionssicherheit, auch Safety genannt) macht, wie noch erläutert wird.

Es ist zu berücksichtigen, dass "a" der Operand für die Abbildung von der Quell- in die Zielmenge und a_inv der Operand für die Umkehrrichtung dieser Abbildung ist und dies die Objektivität der Abbildung sicherstellt. Die Formel (1) zeigt außerdem, dass man sogar zu dem gleichen Element der Quellmenge zurückkommt. Mit anderen Worten, die Anwendung beider Abbildungen ergibt eine identische Abbildung.

Eine Voraussetzung ist, dass es für die sichere Anwendung unschädlich ist, Ausgabedaten zu erzeugen, die als ungültig erkannt werden. Außerdem ist vorgesehen, dass die Anwendung in mindestens zwei unabhängigen replizierenden Recheninstanzen ausgeführt wird. Außerdem gilt die Vorgabe, dass es ausreicht, wenn die unabhängigen replizierenden Recheninstanzen bei der Mehrheit ihrer Ausgaben (d.h. den in Form von Applikationsdatensätzen ausgegebenen Nachrichten) übereinstimmen, um die Anwendung als intrinsisch sicher zu charakterisieren (Die Ausgaben also weiter zu verwenden).

Die replizierenden Recheninstanzen berechnen Ausgaben gemäß einem sicherheitsrelevanten Protokoll (z.B. konform mit EN 50159). Es ist vorgesehen, dass das Protokoll Applikationsdatensätze definiert, in denen ein Applikationsdatenabschnitt für die Nachricht und ein Prüfdatenabschnitt für Prüfdaten vorgesehen ist. In dieser Anwendung werden die Prüfdaten der Nachrichten nicht im Klartext angegeben, sondern müssen mit dem Wert des öffentlichen Schlüssels a_inv mittels des Operators verknüpft (beispielsweise multipliziert) werden, um die unverschlüsselten Prüfdaten zu erhalten. Daher kann vom Empfänger erwartet werden, den verschlüsselten Sicherheitscode mit der Operator * und dem Operand a_inv zu verknüpfen, um beispielsweise einen Klartext-Sicherheitscode zu erhalten und dann zu überprüfen, ob dieser Klartext-Sicherheitscode mit dem Inhalt der Nachricht übereinstimmt.

In der erfindungsgemäßen Anwendung besitzen die replizierenden Recheninstanzen nur Kenntnis über einen der Verschlüsselungsoperanden von a, z.B. a_1. Sie führen die vollständige Berechnung von Applikationsdaten AD, eine Nachricht N repräsentierend, zur Erzeugung des jeweils auszugebenen Applikationsdatensatzes einschließlich des Sicherheitscodes in den Prüfdaten durch, sind aber allein nicht in der Lage, einen Applikationsdatensatz zu erzeugen, der für einen Empfänger gültig erscheint. Der Grund ist, dass $AD * a _ 1 * a _ inv ! = AD$ (2). da a_2 (und andere potenzielle Verschlüsselungsoperanden, wenn mehr davon erforderlich sind) fehlt. Da jede der redundanten replizierenden Recheninstanzen über einen anderen der Verschlüsselungsoperanden verfügt, gilt dies für die anderen replizierenden Recheninstanzen entsprechend. Dies zwingt alle zusammengehörigen replizierenden Recheninstanzen (im Folgenden auch Team genannt) zur Zusammenarbeit.

Die replizierenden Recheninstanzen einer Redundanzgruppe (im Folgenden auch Peers genannt) berechnen also die Ausgaben (hierbei können beliebige Operationen verwirklicht sein, die für die betreffende Applikation redundant durchgeführt werden soll). Anschließend wird das Ergebnis als Sicherheitscode mit dem in der betreffenden Recheninstanz vorliegenden Verschlüsselungsoperanden verknüpft: $AD * a _ n \left(wobei n der der Instanz zugeordnete Verschlüsselungsoperand ist\right)$ (3).

Dann wird er einfach codierte Sicherheitscode (Prüfdaten) an einen Peer gesendet. Dieser Peer kann dann den von seinem Peer erhaltenen Wert mit seinem eigenen a_n verknüpfen und (zumindest bei zwei Peers in einer Redundanzgruppe) das Ergebnis an die Empfänger-Recheninstanz übertragen.

Da jede replizierende Recheninstanz ihren eigenen Ausgabewert für die Nachricht mit dem (bereits verschlüsselten) Sicherheitscode AD ihres Peers in das endgültige Ergebnis kombiniert, stimmt der Sicherheitscode in den Prüfdaten nicht mit der Ausgabe überein, wenn nicht beide Instanzen den gleichen Ausgabewert berechnet haben. Dieser Fehler kann vom Empfänger erkannt werden, indem er den Klartext-Sicherheitscode AD aus dem empfangenen verschlüsselten Sicherheitscode berechnet, also mit a_inv verknüpft und überprüft, ob der so erhaltene Klartext-Sicherheitscode AD mit einem selbst über die empfangene Nachricht gebildeten Sicherheitscode übereinstimmt.

Während der oben beschriebene Fehlerfall ebenfalls sicher ist, wäre es in dem Fall, in dem der selbst berechnet und der Klartext-Sicherheitscode übereinstimmen, schwierig für den Empfänger zu beweisen, dass das Ergebnis durch Zusammenarbeit zweier replizierender Recheninstanzen erzeugt wurde, wenn es keinen Mechanismus gäbe, um AD nur auf kooperative Weise berechnen oder modifizieren zu können: Die Nachricht könnte sonst von nur einer Instanz allein, möglicherweise durch nicht-vitale Software oder Einheiten, erzeugt worden sein. Dies wird durch das erfindungsgemäße Verfahren jedoch wirksam verhindert.

Mit dem Ansatz, die Applikationsdaten AD mit den geteilten Verschlüsselungsoperanden a_1 * a_2 zu verschlüsseln, wird der Empfänger falsche AD berechnen, wenn einer oder beide Faktoren a_1 oder a_2 fehlen. Auf diese Weise müssen die beiden replizierenden Recheninstanzen bei ihren Ergebnissen übereinstimmen, andernfalls würde es keine Ausgabe geben, die für den Empfänger korrekt erscheint. Wenn daher eine der replizierenden Recheninstanzen veranlasst werden soll, die Fähigkeit der gesamten Redundanzgruppe, korrekte Nachrichten zu erzeugen, zu deaktivieren, kann sie dies einfach dadurch tun, dass sie ihren Teilschlüssel a_n löscht oder überschreibt.

Mit dem erfindungsgemäßen Verfahren lässt sich somit mit vergleichsweise geringem Rechenaufwand eine hohe Funktionssicherheit bei der computerimplementierten redundanten Durchführung des sicherheitsrelevanten Prozesses erreichen. Erfindungsgemäß ist zu berücksichtigen, dass hierbei keine nennenswerte Sicherheit gegenüber gezielten Angriffen auf die Datenintegrität gefordert werden muss. So eine Art der Übertragungssicherheit, auch als Security bezeichnet, muss nur gefordert werden, wenn ein System gegen gezielte Angriffe von außen (zum Beispiel durch Hacker) abgewehrt werden muss.

Demgegenüber geht es bei dem erfindungsgemäßen Verfahren lediglich um die Absicherung der funktionalen Sicherheit. Hierbei wird darauf gezielt, Berechnungsfehler bzw. Speicherfehler aufzudecken. Diese entstehen zufällig ohne eine gezielte Absicht, das sicherheitsrelevante System zu kompromittieren. Die beteiligten Recheninstanzen müssen also nur gegenüber derartigen Fehlern abgesichert werden, damit die Übertragung fehlerhafter Nachrichten nicht zu einem sicherheitskritischen Zwischenfall führen können. Dies kann vorteilhaft durch computerimplementierte Verfahren erreicht werden, welche wesentlich geringere Rechenkapazitäten beanspruchen und infolgedessen auch in einer Rechenumgebung zu Steuerungszwecken beispielsweise einer Bahnapplikation laufen können, ohne den ablaufenden Prozess in nicht mehr hinnehmbarer Weise zu verlangsamen.

Beschrieben wird gemäß einem weiteren Aspekt der Erfindung eine Bahnanlage mit einer Rechenumgebung zur Steuerung von Funktionskomponenten für einen Bahnbetrieb. Gemäß diesem Aspekt ist erfindungsgemäß vorgesehen, dass die Rechenumgebung eingerichtet ist, das o. g. Verfahren auszuführen. Die mit diesem Aspekt der Erfindung verbundenen Vorteile sind vorstehend bereits erläutert worden, wobei auf diese Vorteile verwiesen wird.

Beschrieben wird gemäß einem weiteren Aspekt der Erfindung ein Computerprogrammprodukt, enthaltend Programmbefehle, die durch eine Rechenumgebung ausführbar sind. Gemäß diesem Aspekt ist erfindungsgemäß vorgesehen, dass das o. g. Verfahren ausgeführt wird

Gemäß der Erfindung wird somit ein Programmmodule enthaltendes Computerprogrammprodukt mit Programmbefehlen beschrieben, wobei die Programmmodule in derselben Recheninstanz oder mehreren Recheninstanzen der Rechenumgebung laufen können. Mittels des Computerprogrammproduktes, das ein Computerprogramm oder mehrere Computerprogramme umfassen kann, sind jeweils das erfindungsgemäße Verfahren und/oder dessen Ausführungsbeispiele ausführbar und mit der Ausführung werden die vorstehend beschriebenen Vorteile erreicht.

Beschrieben wird gemäß einem weiteren Aspekt der Erfindung ein computerlesbares Speichermedium, enthaltend Daten, welche als Datensätze vom Speichermedium gespeichert werden, gemäß diesem Aspekt ist erfindungsgemäß vorgesehen, dass die Datensätze das vorstehend beschriebene Computerprogrammprodukt nach dem letzten voranstehenden Anspruch ausführbar machen.

Darüber hinaus wird somit eine Bereitstellungsvorrichtung zum Speichern und/oder Bereitstellen des Computerprogramms in Form eines computerlesbaren Speichermediums beschrieben. Die Bereitstellungsvorrichtung ist beispielsweise eine Speichereinheit, die das Computerprogramm speichert und zum Abruf bereitstellt. Alternativ oder zusätzlich ist die Bereitstellungsvorrichtung ein Netzwerkdienst, ein Computersystem, ein Serversystem, insbesondere ein verteiltes, beispielsweise cloudbasiertes Computersystem oder virtuelles Rechnersystem, welches das Computerprogramm auf einem computerlesbaren Speichermedium speichert und vorzugsweise in Form eines Datenstroms bereitstellt.

Die Bereitstellung erfolgt in Form von Programmmodule beschreibenden Programmdatensätzen als Datei, insbesondere als Downloaddatei, oder als Datenstrom, insbesondere als Downloaddatenstrom, des Computerprogrammproduktes. Das Computerprogrammprodukt wird beispielsweise unter Verwendung der Bereitstellungsvorrichtung in eine Rechenumgebung übertragen, sodass das erfindungsgemäße Verfahren in einer Recheninstanz oder mehreren Recheninstanzen dieser Rechenumgebung zur Ausführung gebracht werden kann.

### Ausgestaltungen der Erfindung

Weiterbildungen der Erfindung beschreibende Varianten werden nachfolgend ohne Beschränkung des grundlegenden Gedankens der Erfindung erläutert.

Gemäß einer Variante sind die oben erklärten Aspekte der Erfindung dadurch bestimmt, dass im o. g. Schritt c) die zur Verschlüsselung verwendeten Verschlüsselungsoperanden die Eigenschaft haben, dass diese Gruppenelemente einer Gruppe bilden,
im o. g. Schritt d)
in der ersten replizierenden Recheninstanz und der zweiten replizierenden Recheninstanz jeweils ein anderes Gruppenelement und nicht das neutrale Gruppenelement verwendet wird, wobei das Verknüpfungsergebnis der Verknüpfung der verwendeten Gruppenelemente ebenfalls ein Gruppenelement der Gruppe bildet,
im o. g. Schritt e)
die erste replizierende Recheninstanz und die zweite replizierende Recheninstanz jeweils die unverschlüsselten Prüfdaten unter Verwendung des in der betreffenden replizierenden Recheninstanz verfügbaren Gruppenelementes verschlüsseln,
im o. g. Schritt f)
die erste replizierende Recheninstanz und die zweite replizierende Recheninstanz jeweils die empfangenen Prüfdaten unter Verwendung des in der betreffenden replizierenden Recheninstanz verfügbaren Gruppenelementes ein weiteres Mal verschlüsseln,
und im o. g. Schritt g)
in der Empfänger-Recheninstanz gemäß Merkmal b) die doppelt verschlüsselten Prüfdaten unter Verwendung eines gemeinsamen Entschlüsselungsoperanden, der ein inverses Gruppenelement zu dem besagten Verknüpfungsergebnis bildet, entschlüsselt werden.

Ist im Rahmen dieser Erfindungsbeschreibung im Zusammenhang von Operationen, Mengen und Operanden von einer Gruppe die Rede, so ist der Begriff in seiner mathematischen Definition zu verstehen. Eine mathematische Gruppe ist eine Menge von Elementen mit einer Verknüpfung, die je zwei Elementen der Menge ein drittes Element derselben Menge zuordnet und dabei drei Bedingungen, die Gruppenaxiome, erfüllt: das Assoziativgesetz, die Existenz eines neutralen Elements und die Existenz von inversen Elementen (Der Ausdruck der Gruppe wird im Folgenden auch bei der Zusammenfassung von Recheninstanzen verwendet, hier sind die Gruppenteilnehmer allerdings die Recheninstanzen).

Die folgenden Bedingungen (4), (5), (6) gelten für eine Gruppe G. Dabei ist * der Operator, a, b, c die Operanden, die Elemente der Gruppe sind, und e das neutrale Element der Gruppe. Wenn (G, *) eine Gruppe ist, heißen die Elemente der Menge G Gruppenelemente.

Für alle a, b, c ∈ G gilt Assozivität: $\left(a∗b\right) ∗ c = a ∗ \left(b∗c\right)$ (4).

Es gibt ein einziges neutrales Element e ∈ G, mit dem für alle a ... ∈ G gilt: $a ∗ e = e ∗ a = a$ (5)

Zu jedem a ... ∈ G existiert ein einziges inverses Element a_inv ... ∈ G mit $a ∗ a _ inv = a _ inv ∗ a = e$ (6)

Dies bedeutet, dass ein einziges inverses Element als öffentlicher Schlüssel verwendet werden kann, um für alle möglichen Verknüpfungen von als Teilschlüssel verwendeten Elementen der Gruppe eine Entschlüsselung zu ermöglichen (vorausgesetzt, dass die Verschlüsselung erfindungsgemäß mit allen vorgegebenen Teilschlüsseln auch erfolgt ist). Daher ist das Verfahren vorteilhaft mit einem geringen Speicheraufwand für den verwendeten öffentlichen Schlüssel, der für alle Empfänger-Recheninstanzen verfügbar sein muss, durchführbar.

Gemäß einer Variante sind die oben erklärten Aspekte der Erfindung dadurch bestimmt, dass die Verknüpfung der Verschlüsselungsoperanden nach Merkmal e) und f) gemäß Anspruch 1 mit demjenigen Operator erfolgt, der auch für die Verschlüsselung der Nachricht verwendet wird.

Hierdurch ist es möglich, einfache Algorithmen zur Verschlüsselung auszuwählen, die vorteilhaft schnell gerechnet werden können und daher wenig Rechenresourcen verbrauchen. Der Operator kann zum Beispiel die Multiplikation sein.

Gemäß einer Variante sind die oben erklärten Aspekte der Erfindung dadurch bestimmt, dass die Nachricht in einem Applikationsdatensatz enthalten ist, wobei dieser
h) Applikationsdaten, die die Nachricht in einem Applikationsdatenabschnitt repräsentieren, und
i) Prüfdaten, die einen Prüfdatenabschnitt mit den Prüfdaten bilden, aufweist und wobei
j) das Verschlüsseln in den o. g. Schritten c), d), e) und f) und das Entschlüsseln in dem o. g. Schritt g) zumindest auf die Prüfdaten angewendet wird, wobei der Applikationsdatensatz nur in dem Fall für eine weitere Verarbeitung freigegeben wird, dass die Prüfdaten mit der Nachricht korrelieren.

Als Nachricht wird, wie bereits erwähnt, der Dateninhalt (d. h. die auf die betreffende Applikation gerichteten Nutzdaten, auch als Applikationsdaten bezeichnet) des zugehörigen Applikationsdatensatzes verstanden. Anders gesagt kann ein und dieselbe Nachricht beispielsweise in zwei Speichereinheiten jeweils als Applikationsdatensatz abgespeichert werden. Die Nachrichten können dabei durch Daten repräsentiert sein, die unterschiedliche Zwecke erfüllen. Dieselbe Nachricht kann zum Beispiel in zwei Applikationsdatensätzen verkörpert sein. Bei der redundanten Datenverarbeitung derselben Nachricht kann so die verarbeitete Nachricht in mehreren Applikationsdatensätzen abgespeichert werden, sodass zumindest ein Teil der Daten dieser Datensätze miteinander verglichen werden kann (sogenanntes Voting). Beim Verschlüsseln von Nachrichten kann der gesamte Applikationsdatensatz oder zumindest ein Teil der Daten des Applikationsdatensatzes, insbesondere die Prüfdaten, verschlüsselt werden. Die Prüfdaten enthalten vorzugsweise bereits einen Prüfcode, bestehend aus den modifizierten (und damit veränderten) Applikationsdaten, sodass dieser durch das Verschlüsseln der Nachricht ein weiteres Mal verändert wird.

Im Rahmen dieser Erfindungsbeschreibung wird zwischen Modifizieren, Codieren und (mehrfachen) Verschlüsseln von Datensätzen unterschieden. Technisch gesehen können alle Mechanismen ähnlich oder sogar unter Zuhilfenahme derselben Algorithmen erfolgen. Die unterschiedlichen Begriffe dienen also nur einer zweifelsfreien Zuordnung in dem Verfahren zu dem jeweils intendieren Zweck (der jeweils relevant ist für unterschiedliche Safety-Aspekte, nicht für die Security). Während die Modifikation und das Codieren beliebig und mit gemäß dem Stand der Technik bekannten Algorithmen erfolgen kann, ist mit dem Verschlüsseln das erfindungsgemäß beschriebene Verfahren zum "doppelten" Verschlüsseln und anschließendem Entschlüsseln gemeint. Sowohl das Modifizieren und Codieren als auch das Verschlüsseln muss dabei, wie erläutert, keinen erhöhten kryptographischen Anforderungen (Security) genügen, dahingehend, dass diese schwer zu dechiffrieren wären, denn es geht dabei erfindungsgemäß lediglich um eine Absicherung des technischen Verfahrens und ein Aufdecken zufällig auftretender Fehler (Rechenfehler und Speicherfehler) bei der Datenverarbeitung.

Das Merkmal, dass die Nachricht in einem Applikationsdatensatz enthalten ist, bedeutet in diesem Zusammenhang, dass die zu übertragenden Informationen strukturiert in einem spezifischen Datensatz organisiert und gespeichert werden. Ein Applikationsdatensatz stellt dabei eine definierte Datenstruktur dar, welche es ermöglicht, die einzelnen Teile der Nachricht und deren zugehörige Prüfdaten eindeutig zuzuordnen und zu verarbeiten.

Der Begriff von Applikationsdaten, die die Nachricht in einem Applikationsdatenabschnitt repräsentieren, bedeutet im Rahmen der Erfindungsbeschreibung, dass die eigentliche Nachricht, die übertragen werden soll, innerhalb eines Applikationdsatenabschnitts des Applikationsdatensatzes enthalten ist. Dieser Applikationsdatenabschnitt enthält die essenzielle Information, auch als Nutzdaten bezeichnet, die die Nachricht darstellen, welche für die Weiterverarbeitung oder zur Nutzung innerhalb eines Bahnautomatisierungssystem wichtig sind.

Prüfdaten, die einen Prüfdatenabschnitt der Nachricht bilden, bedeuten, dass innerhalb des Applikationsdatensatzes zusätzlich zur eigentlichen Nachricht auch Daten enthalten sind, die zur Überprüfung der Integrität und Authentizität der Nachricht verwendet werden. In dem Prüfdatenabschnitt können Prüfsummen, Validierungscodes oder andere Kontrollinformationen enthalten sein, die es ermöglichen, die Korrektheit der Nachricht oder des Verarbeitungsprozesses während und nach der Übertragung zu prüfen.

Dass das Verschlüsseln in den o. g. Schritten c), d), e) und f) und das Entschlüsseln in dem o. g. Schritt g) auf die Prüfdaten in den Nachrichten angewendet wird, bedeutet, dass speziell auf die Prüfdaten innerhalb des Applikationsdatensatzes verschlüsselt vorliegen. Dies stellt sicher, dass die Integrität und Sicherheit der Prüfdaten zusätzlich zur Nachricht selbst geschützt wird, sodass Manipulationen oder Fehler erkannt werden können.

Dass der Applikationsdatensatz nur in dem Fall für eine weitere Verarbeitung freigegeben wird, dass die Prüfdaten mit der Nachricht korrelieren bedeutet, dass der Prozess so gestaltet ist, dass die im Applikationsdatensatz enthaltenen Daten erst dann weiterverarbeitet werden können, wenn eine inhaltliche Übereinstimmung zwischen der Nachricht und den Prüfdaten festgestellt wird. Diese Korrelation bestätigt, dass die Nachricht während der Übertragung korrekt und unverändert geblieben ist und gewährleistet somit eine zusätzliche Sicherheitsschranke, bevor die Nachricht weiterverarbeitet oder genutzt wird.

Das Merkmal, dass das doppelte Verschlüsseln in den o. g. Schritten c), d), e) und f) und das Entschlüsseln zumindest auf die Prüfdaten in den Nachrichten angewendet wird, stellt sicher, dass die Prüfdaten abgesichert werden und nur wieder verfügbar gemacht werden können, wenn alle (vorzugsweise zwei) replizierende Recheninstanzen nacheinander die Verschlüsselung durchgeführt haben. Somit kann, wie bereits erläutert, ausgeschlossen werden, dass die Ergebnisse für nicht redundant erfolgte Verfahrensschritte weiterverarbeitet werden.

Das Merkmal, dass der Applikationsdatensatz nur in dem Fall für eine weitere Verarbeitung freigegeben wird, wenn die Prüfdaten mit der Nachricht korrelieren, stellt sicher, dass im Falle, dass redundant erzeugte Ergebnisse vorliegen, nur konsistente Daten weiterverarbeitet werden. Das Voting verhindert also die Verarbeitung fehlerhafter oder manipulierte Nachrichten und erhöht somit die Zuverlässigkeit und Sicherheit der sicherheitsrelevanten Anwendung.

Gemäß einer Variante sind die oben erklärten Aspekte der Erfindung dadurch bestimmt, dass dieses zur Überprüfung einer Vielzahl N von redundant erzeugten Applikationsdatensätzen der Nachricht verwendet wird, wobei
k) die Nachricht durch die Applikationsdaten in jedem der N Applikationsdatensätze repräsentiert wird,
I) die erste replizierende Recheninstanz als erster Voter und die zweite replizierende Recheninstanz als zweiter Voter ausgeführt sind, von denen jeder redundant das Voting für die Vielzahl N der Datensätze durchführt, und nur für den Fall, dass eine Mehrheit M der N Datensätze sowohl im ersten Voter als auch im zweiten Voter mit übereinstimmenden Applikationsdaten ermittelt werden konnte, mindestens ein Datensatz der Mehrheit M von Datensätzen an die Empfänger-Recheninstanz übertragen wird,
m) die o. g. Schritte e), f) und g) für diejenigen Datensätze durchgeführt werden, mit denen die Nachricht gemäß dem Schritt I) das Voting durchgeführt wird.

Ein Vergleicher, auch Voter genannt, ist eine Einrichtung zur Ermittlung einer Funktionsfähigkeit redundanter Systeme. Mehrheitsentscheidungssysteme, kurz MooN Systeme, werden der aktiven Redundanz zugeordnet (Majoritätsredundanz). Sie werden als Mittel zur Steigerung der Fehlertoleranz von Systemen, für die eine hohe Betriebssicherheit (Safety) gegen Ausfall oder Auftreten von Fehlern gefordert wird, eingesetzt. Es gibt verschiedene Architekturen von MooN Systemen. Praktische Anwendungen im Rahmen dieser Erfindung finden sich beispielsweise in triplex (2oo3) und quadruplex (3oo4) Architekturen wieder. Die Ergebnisse der MooN Systeme werden von dem Mehrheitsentscheider (Voter) verglichen, um das Ergebnis der Mehrheit weiterzugeben. Die Weitergabe des Ergebnisses erfolgt, solange mindestens M der N Systeme funktionieren (gilt z. B. für Hardwarekomponenten und Maschinen) bzw. M der N Ergebnisse beim Vergleichen übereinstimmen (gilt z. B. für Daten und Messwerte). Anderenfalls gilt das Gesamtsystem als ausgefallen, und es kann ein Fehler ausgegeben werden und/oder eine Schutzmaßnahme (z. B. Anhalten des technischen Prozesses) eingeleitet werden.

Der Voter führt also nach dem Vergleichen eine Mehrheitsentscheidung durch. Dabei können folgende Fälle auftreten.
1. Alle Ergebnisse sind identisch (auch bei identischen Ergebnissen wird im Rahmen dieser Erfindungsbeschreibung von mehreren Ergebnissen gesprochen, in dem Sinne, dass diese von unterschiedlichen Recheninstanzen berechnet wurden. Mit anderen Worten ist das mathematische Verständnis, dass dasselbe Ergebnis nur ein Ergebnis ist, hier nicht von Bedeutung). Dies gilt als Nachweis, dass der technische Prozess in allen Recheninstanzen fehlerfrei läuft. Dieses jeweilige Ergebnis kann jeweils in der an dessen Zustandekommen beteiligten Recheninstanz zur weiteren Durchführung des technischen Prozesses verwendet werden oder Nachrichten an andere Recheninstanzen generieren.
2. Die Mehrheit der Ergebnisse ist identisch. Dies gilt als Nachweis, dass die Mehrheit dieser Ergebnisse auch richtig ist. Dieses jeweilige (mit anderen Ergebnissen identische) Ergebnis kann in der an dessen Zustandekommen beteiligten Recheninstanz zur weiteren Durchführung des technischen Prozesses verwendet werden oder Nachrichten an andere Recheninstanzen generieren, während Recheninstanzen, die ein abweichendes Ergebnis berechnet haben, von der Durchführung des technischen Prozesses ausgeschlossen werden.
3. Es gibt keine Mehrheit an identischen Ergebnissen. Dies bedeutet, dass sich entweder alle Ergebnisse voneinander unterscheiden oder die Zahl identischer Ergebnisse im Vergleich zu der Zahl von Ergebnissen, die sich von diesem Ergebnis unterscheiden, keine Mehrheit bilden. Dies gilt als Nachweis, dass das Risiko des Vorliegens eines Fehlers zu groß ist. Es muss eine Schutzmaßnahme für die Durchführung des technischen Prozesses durchgeführt werden. Diese kann beispielsweise darin bestehen, dass eine Warnmeldung ausgegeben wird oder die Durchführung des technischen Prozesses abgebrochen wird.

Ein Ausschluss aus der Redundanzgruppe der am technischen Prozess beteiligten (kurz beitragenden) redundanten Recheninstanzen (welche im Sinne dieser Erfindung ebenfalls als replizierende Recheninstanzen bezeichnet werden können), seien es einzelne oder das ganze Team, (mit Team ist die Gesamtheit der die betreffenden Prozessschritte redundant ausführenden Recheninstanzen, auch Peers genannt, gemeint) kann mittels Nachrichten kommuniziert werden, auch an die Recheninstanzen selbst. Die Recheninstanzen schalten sich ab (oder im Falle der Störung der Abschaltungsfunktion werden sie fremd abgeschaltet), wenn sie vom Voter als fehlerhaft identifiziert werden, und sie können anschließend fehlerfrei wieder hochgefahren werden. Vorteilhaft erhöht dies bei NooM-Systemen (mit N >1 und M > 2) die Funktionssicherheit bei gleichzeitig hoher Verfügbarkeit des Systems.

Wenn die betroffene Recheninstanz wieder in den technischen Prozess eingegliedert wird, bedeutet dies, dass diese wieder synchron mit den vormals im technischen Prozess verbliebenen Recheninstanzen arbeiten muss. Mit anderen Worten erzeugt die wieder eingegliederte Recheninstanz die erforderlichen Ergebnisse in einer derartigen zeitlichen Nähe zu den anderen Recheninstanzen, dass die Ergebnisse wieder allesamt nach Eingliederung in den Prozess, wie oben beschrieben, durch den Voter verglichen werden können. Damit wird sichergestellt, dass Recheninstanzen, die auf Grund des Votings von dem technischen Prozess ausgeschlossen wurden, sich mit anderen Worten also in Quarantäne befinden, im Rahmen des erfindungsgemäßen Verfahrens "repariert" und nach Synchronisierung wieder in den technischen Prozess eingegliedert werden können. Dies bedeutet vorteilhaft, dass der technische Prozess auch bei wiederholtem Auftreten von Fehlern dauerhaft ohne Unterbrechung weiter betrieben werden kann. Voraussetzung ist lediglich, dass noch eine Mehrheit der redundant arbeitenden Recheninstanzen fehlerfrei läuft, da hierdurch die Betriebssicherheit des technischen Prozesses noch gegeben ist.

Die Mehrheit der redundant arbeitenden Recheninstanzen kann auch genutzt werden, um eine Zustandskopie für die zu reparierende Recheninstanz anzufertigen. Hierbei ist sichergestellt, dass diese Zustandskopie fehlerfrei ist, was durch die übereinstimmenden Ergebnisse der Mehrheit der Recheninstanzen mit genügend hoher Wahrscheinlichkeit abgesichert ist. Nach Übertragung der Zustandskopie auf die sich in Quarantäne befindende Recheninstanz kann diese die "verpassten" Rechenschritte unter Ausnutzung der ebenfalls gespeicherten Nachrichten nachholen, bis diese wieder synchron läuft und dann in den technischen Prozess reintegriert werden. Nun stehen wieder genügend replizierende Recheninstanzen zur Verfügung, um im nächsten Fehlerfall wieder die falsch rechnende Recheninstanz vom Prozess auszuschließen. Anderenfalls würden nacheinander immer mehr Recheninstanzen ausfallen, bis der technische Prozess zum Erliegen käme. Somit trägt die Erfindung auch zu einer Steigerung der Stabilität des technischen Prozesses bei, ohne dass die Sicherheit (Safety) darunter leidet.

Ein Voter kann softwaretechnisch oder hardwaretechnisch realisiert sein, wobei im Rahmen dieser Erfindung vorzugsweise ein softwaretechnischer Voter zum Einsatz kommt. Ein softwaretechnisch realisierter Voter besteht aus einem Programmmodul für das Voting, welches als Eingaben die oben genannten Ergebnisse verarbeitet und als Ausgabe einen Fehler oder auch eine Freigabe generiert. Hardwaretechnisch kann ein Voter auch als Analogrechner ausgeführt sein, der ein Voting durch eine logische Verknüpfung der Bausteine des Analogrechners durchführt. Insbesondere kann ein Programmmodul auch auf einem Prozessor laufen, der vorzugsweise selbst an der Erzeugung der Ergebnisse nicht beteiligt ist. Hierdurch entsteht eine hardwaretechnische Trennung der Aufgaben der Erzeugung der Ergebnisse auf der einen Seite und der Bewertung der Ergebnisse durch Vergleichen auf der anderen Seite. Dies hat den Vorteil, dass die Verfahrensschritte der Erzeugung der Ergebnisse sowie des Vergleichens der Ergebnisse sich weniger beeinflussen können und dadurch die Betriebssicherheit des Prozesses des Vergleichens zusätzlich gesteigert werden kann.

Diese Ausgestaltung der Erfindung stellt sicher, dass ein Voting redundant durchgeführt wird, wenn die replizierenden Recheninstanzen als Voter ausgeführt sind. Nur wenn erfindungsgemäß die beiden Voter die Prüfdaten der bereits gevoteten Applikationsdatensätze untereinander austauschen, lassen diese sich im Ergebnis in der Empfänger-Recheninstanz wieder entschlüsseln, um die Nachricht weiterzuverarbeiten. Selbstverständlich wird der betreffende Applikationsdatensatz durch die als Voter ausgeführten replizierenden Recheninstanzen nur dann an die Empfänger-Recheninstanz übertragen, wenn das Voting zu einem positiven Ergebnis führt, d. h. die Mehrheit der gevoteten, die Nachricht repräsentierenden Daten übereinstimmt. Die Funktionalität des Votings wird also durch die replizierenden Recheninstanzen gewährleistet. Die Tatsache, dass das Voting tatsächlich redundant durchgeführt wurde, wird durch das erfindungsgemäße Verschlüsselungsverfahren des doppelten Verschlüsselns sichergestellt.

Gemäß einer Variante sind die oben erklärten Aspekte der Erfindung dadurch bestimmt, dass das Verfahren bei dem redundanten Übertragen zur Qualitätsbeurteilung eines von einer Zeitquelle stammenden Zeitsignals verwendet wird, wobei
n) die erste replizierende Recheninstanz und zweite replizierende Recheninstanz jeweils als Synchronisierungseinheit ausgeführt sind, von denen jede redundant das Zeitsignal empfängt, um die Qualität zu beurteilen,
o) die zumindest erste replizierende Recheninstanz und zweite replizierende Recheninstanz jeweils einen Datensatz, der die die Qualität der Zeitquelle betreffende Nachricht repräsentiert, erzeugt und mindestens eine der besagten replizierenden Recheninstanzen den durch sie erzeugten Datensatz an die Empfänger-Recheninstanz überträgt,
p) die o. g. Schritte e), f) und g) zumindest für Datensätze durchgeführt werden, mit denen die Nachricht gemäß dem Schritt o) übertragen wird.

Die Qualität einer Zeitquelle kann in an sich bekannter Weise unterschiedlich ermittelt und beurteilt werden. Beispielsweise ist es möglich, dass die Synchronität von Zeitsignalen verschiedener Zeitquellen beurteilt wird. Eine andere Möglichkeit besteht darin, für verschiedene Zeitquellen eine Drift des Zeitsignals zu ermitteln oder abzuschätzen und zur Beurteilung der Qualität der Zeitquelle heranzuziehen. Als Drift wird in diesem Zusammenhang ein systematischer Fehler der Zeitquelle verstanden, dahingehend, dass diese die Zeitsignale zu schnell oder (aber nicht zwingend über längere Zeit konstanter) zu langsam generiert (umgangssprachlich spricht man davon, dass eine Zeitquelle wie zum Beispiel eine Uhr vorgeht oder nachgeht).

Das Merkmal, dass die erste Recheninstanz und die zweite Recheninstanz jeweils als Synchronisierungseinheit verwendet werden, bietet den Vorteil, dass eine verbesserte Zuverlässigkeit bei der Beurteilung der zum Einsatz kommenden Zeitquellen gewährleistet wird. Synchron laufende Zeitquellen bzw. eine zuverlässige Bestimmung einer Drift von Zeitquellen zwecks Kompensation (rechnerisch oder durch Synchronisation der betroffenen Zeitquelle mit ihren Partnern, also kooperierenden anderen Zeitquellen) sind eine wesentliche Voraussetzung für das redundante Abarbeiten von Applikationsprogrammen bei einer gleichzeitig hohen Rechenperformance, wobei außerdem sowohl die Betriebssicherheit als auch die Zuverlässigkeit des Gesamtsystems erhöht wird.

Gemäß einer Variante sind die oben erklärten Aspekte der Erfindung dadurch bestimmt, dass eine Vielzahl N von replizierenden Recheninstanzen zum Einsatz kommt, wobei
q) N > 2 ist und die erste replizierende Recheninstanz und die zweite replizierende Recheninstanz zu den N replizierenden Recheninstanzen zählen,
r) alle Schritte, die gemäß den vorstehenden Ansprüchen jeweils in der ersten replizierenden Recheninstanz und in der zweiten replizierenden Recheninstanz oder durch eine dieser beiden replizierenden Recheninstanzen durchgeführt werden, analog auch durch alle möglichen weiteren Kombinationen von zwei replizierenden Recheninstanzen unter den N replizierenden Recheninstanzen durchgeführt werden.

Dass N größer als 2 ist (und die erste replizierende Recheninstanz und die zweite replizierende Recheninstanz beinhaltet), bringt den Vorteil, dass die Anzahl N von beteiligten Recheninstanzen über zwei hinausgeht, und somit eine Mehrheit M gebildet werden kann, die kleiner als die Anzahl N ist. Somit wird durch die Erhöhung der Anzahl der replizierenden Recheninstanzen die Ausfallsicherheit gesteigert, denn die Mehrheit von replizierenden Recheninstanzen mit übereinstimmenden Ergebnissen kann weiterlaufen, während eine Minderheit von replizierenden Recheninstanzen mit abweichenden Ergebnissen vom Prozess ausgeschlossen wird. Auf diese Weise kann beispielsweise ein 3oo2-System als 2oo2-System weiterlaufen und dabei eine genügende Funktionssicherheit gewährleisten.

Das Merkmal, dass eine Vielzahl N von replizierenden Recheninstanzen zum Einsatz kommt, hat den Vorteil, dass es die Redundanz und somit die Zuverlässigkeit des Verfahrens erhöht. Durch die Einbeziehung mehrerer replizierender Recheninstanzen wird sichergestellt, dass auch bei einem Ausfall oder einem Fehler in einer oder einigen (wenn es eine Minderheit ist) dieser replizierenden Recheninstanzen die korrekte Funktion des Systems insgesamt nicht beeinträchtigt wird. Dies führt zu einer höheren Fehlertoleranz und Stabilität des Kommunikationsnetzwerks, was zum Beispiel in sicherheitskritischen Bereichen wie der Bahnautomatisierung von großer Bedeutung ist.

Alle Schritte, die gemäß den vorstehenden Ansprüchen jeweils in der ersten replizierenden Recheninstanz und in der zweiten replizierenden Recheninstanz durchgeführt werden, werden analog auch durch alle weiteren der N replizierenden Recheninstanzen durchgeführt (Prinzip der Redundanz). Alle N replizierenden Recheninstanzen bilden somit eine Redundanzgruppe, von der die Erzeugung identischer Ergebnisse, also jeweils derselben Nachricht zu erwarten ist.

Indem mehr als zwei Recheninstanzen verwendet werden, entsteht beispielsweise bei einem Voting zusätzlich die Möglichkeit, Fehler bei der Durchführung (zusätzlich zu Fehlern in den Applikationsdatensätzen selbst) festzustellen. Für ein 2oo3-System bedeutet dies zum Beispiel, dass eine der drei den Voter bildenden, replizierenden Recheninstanzen ausfallen kann, wobei die beiden anderen Recheninstanzen für den Fall, dass deren Kooperation miteinander die betreffende Nachricht erfolgreich votet, die Nachricht für eine Weiterverarbeitung weitergeben können. Technisch gesehen führt bei dieser Variante jedes Paar von replizierenden Recheninstanzen ein 2oo2-Voting durch, wobei das Zusammenwirken aller drei Recheninstanzen im Ergebnis ein 3oo2-Voting ergibt. Dies trägt zur Erhöhung der Gesamtsicherheit und Zuverlässigkeit des Übertragungs- und Verschlüsselungsverfahrens bei.

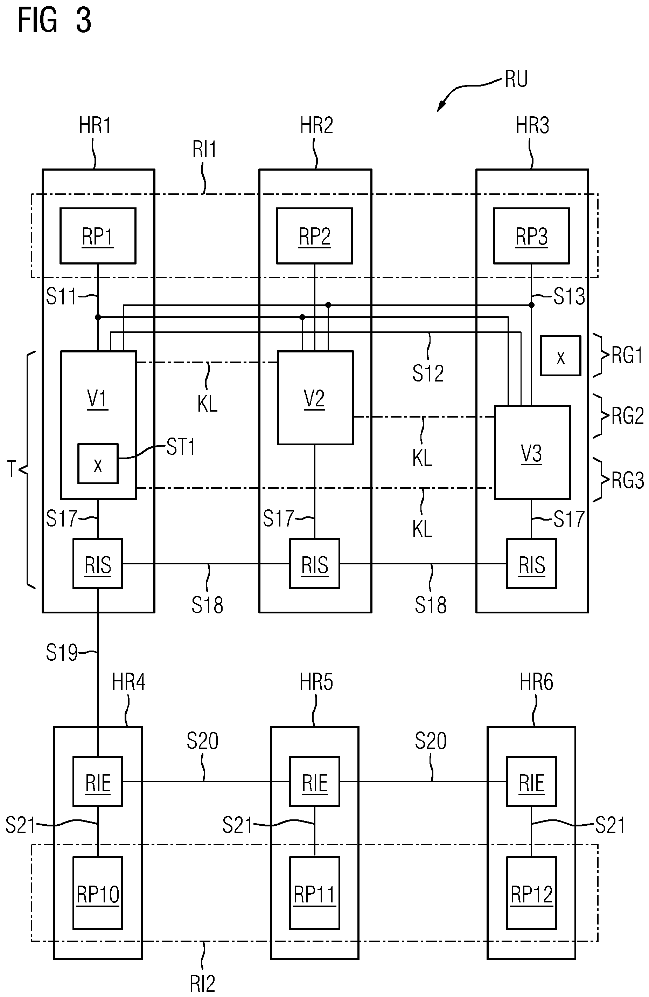

In Bezug auf den vorstehend genannten Schritt r) ist es demnach ausreichend, wenn ausreichend viele der Kombinationen von zwei replizierenden Recheninstanzen, darunter auch die Kombination der ersten replizierenden Recheninstanz und der zweiten replizierenden Recheninstanz, gewährleisten, dass der Prüfcode in dem Prüfdatenabschnitt mit der Nachricht korreliert. Dies ist nämlich der Fall, wenn die mit einer vorgegebenen Mehrheit M von Nachrichten korrelierenden Kombinationen von replizierenden Recheninstanzen ein positives Ergebnis liefern. Mit anderen Worten ist gemäß dieser Ausgestaltung ein MooN-System realisiert, um Redundanz für die Durchführung des redundanten Verfahrens zu schaffen. Vorzugsweise kann insgesamt ein 2oo3-System realisiert werden, wobei eine Mehrheit von zwei (von drei) übereinstimmenden Nachrichten durch eine erfolgreiches 2oo2-Voting (beispielsweise des ersten und zweiten Applikationsdatensatzes) in einer Zweiergruppe der replizierenden Recheninstanzen bestätigt wird, während die beiden anderen Kombinationen die Minderheit des einen fehlerhaften (in diesem Beispiel dritten) Applikationsdatensatzes in das 2oo2-Voting einbeziehen und das jeweils durchgeführte Voting einen Fehler feststellt (vergleiche auch Figur 3).

Alle Schritte, die gemäß den vorstehenden Ansprüchen jeweils in der ersten Recheninstanz und in der zweiten Recheninstanz oder durch eine dieser beiden Recheninstanzen durchgeführt werden, werden wie erläutert analog auch durch alle möglichen weiteren Kombinationen von zwei Recheninstanzen unter den N Recheninstanzen durchgeführt. Der wesentliche Vorteil liegt in der Erzeugung einer zusätzlichen Funktionsredundanz der eingesetzten replizierenden Recheninstanzen. Dies führt zu einer robusteren Sicherheitsinfrastruktur, die auch bei Ausfall einer oder mehrerer Recheninstanzen ihre Funktionstüchtigkeit behält, da andere Kombinationen von zwei Recheninstanzen die notwendigen Prüfungen übernehmen können. Dieses Merkmal ermöglicht die Implementierung eines MooN-Systems, welches nicht nur Redundanz schafft, sondern auch durch das Voting-Prinzip sicherstellt, dass Fehler zuverlässig erkannt und ausgeschlossen werden, was die Betriebssicherheit steigert.

Zusammenfassend bieten die Verbesserungen durch diese Merkmale insgesamt eine höhere Funktions- und Ausfallsicherheit beispielsweise in Bahnautomatisierungssystemen durch erweiterte Redundanzmechanismen, gleichzeitige Mehrfachüberprüfung und Robustheit gegenüber einzelnen Fehlern oder Fehlausfällen.

Gemäß einer Variante sind die oben erklärten Aspekte der Erfindung dadurch bestimmt, dass der Operator durch ein XOR-Gatter realisiert ist.

Der Anspruch beschreibt ein Verfahren, bei dem der Operator durch ein XOR-Gatter realisiert ist. Ein Vorteil der Verwendung eines XOR-Gatters ist, dass es eine einfache und effiziente Methode zur Verschlüsselung und Entschlüsselung von Nachrichten bietet. Das XOR-Gatter ermöglicht eine bijektive Abbildung, die sicherstellt, dass jeder Verschlüsselungsoperand eine eindeutige Beziehung zur ursprünglichen Nachricht hat. Darüber hinaus ermöglicht das XOR-Gatter, dass die ursprüngliche Nachricht leicht wiederhergestellt werden kann, wenn der gleiche Operand verwendet wird, der bei der Verschlüsselung angewendet wurde. Dies ermöglicht vorteilhaft ein hochperformantes Rechnen. Insbesondere Steueraufgaben in einem technischen System, wie beispielsweise einem Bahnautomatisierungssystem können daher vorzugsweise in Echtzeit, zumindest ohne große Zeitverzögerungen durchgeführt werden. Damit erfordert die Verwendung eines XOR-Gatters geringere Rechenressourcen, was Leistung des gesamten Bahnautomatisierungssystems optimiert.

### Exemplarische Ausführungsbeispiele der Zeichnung

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar.
Figur 1 zeigt eine Bahnanwendung mit einer Rechenumgebung mit ihren Wirkzusammenhängen schematisch, wobei ein Ausführungsbeispiel des erfindungsgemäßen Verfahrens mit der Rechenumgebung ausgeführt werden kann.
Figur 2 (bestehend aus den Teilfiguren 2A und 2B, verteilt auf zwei Seiten) zeigt ein Ausführungsbeispiel des erfindungsgemäßen Verfahrens anhand einer Rechenumgebung in der Bahnanwendung gemäß Figur 1 mit zwei Hostrechnern als Blockschaltbild, wobei die einzelnen Funktionseinheiten Programmmodule enthalten, die Applikationsprogramme ergeben und jeweils in einem oder mehreren Prozessoren ablaufen können und die Schnittstellen demgemäß softwaretechnisch oder hardwaretechnisch ausgeführt sein können.
Figur 3 zeigt eine Anordnung mit drei Hostrechnern, auf denen replizierende Recheninstanzen sowie ein redundant arbeitender Voter verteilt sind, schematisch als Blockschaltbild.
Figur 4 zeigt ein Ausführungsbeispiel des erfindungsgemäßen Verfahrens als die Verarbeitung von Applikationsdatensätzen wiedergebendes Ablaufdiagramm, wobei die gezeigten Verfahrensschritte einzeln oder in Gruppen durch Programmmodule verwirklicht sein können und wobei die Recheninstanzen und Schnittstellen gemäß Figur 2 beispielhaft angedeutet sind.
Die Figuren 5 und 6 zeigen alternative Abläufe des Verfahrens gemäß Figur 4, wobei Unterschiede bei der Übertragung der Applikationsdatensätze bestehen.

### Detaillierte Beschreibung der Ausführungsbeispiele

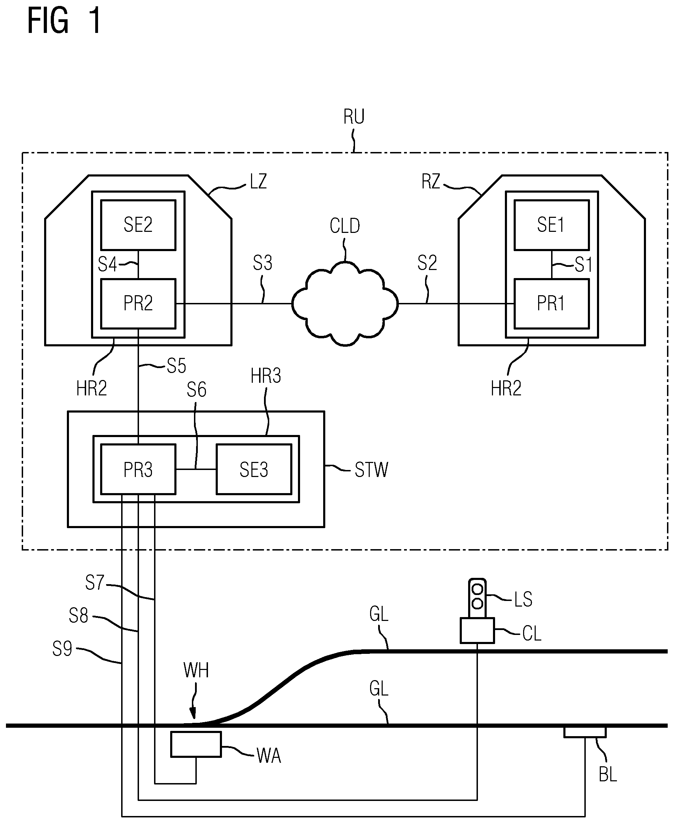

In Figur 1 ist schematisch eine Bahnanwendung dargestellt, welche durch eine Rechenumgebung RU gesteuert wird. Die Bahnanwendung weist Gleise GL auf, an denen verschiedene Komponenten der Stellwerkstechnik exemplarisch dargestellt sind. Hierbei handelt es sich um einen Weichenantrieb WA, der eine Weiche WH stellen kann. Weiterhin ist eine Balise BL (hier eine mit dem Stellwerk verbundene Transparentdatenbalise) in einem der Gleise GL verbaut, mit deren Hilfe Informationen mit die Balise BL überfahrenden Zügen ausgetauscht werden können. Zuletzt ist ein Lichtsignal LS dargestellt, welches durch einen Controller CL gesteuert wird.

Die Rechnerumgebung RU kann verschiedene Hostrechner, nämlich einen erster Hostrechner HR1, in dem ein erster Prozessor PR1 über eine erste Schnittstelle S1 mit einer ersten Speichereinheit SE1 verbunden ist, einen zweiten Hostrechner HR2 , in dem ein zweiter Prozessor PR2 über eine zweite Schnittstelle S2 mit einer zweiten Speichereinheit SE2 verbunden ist, und einen dritten Hostrechner HR3, in dem ein dritter Prozessor PR3 über eine dritte Schnittstelle S3 mit einer dritten Speichereinheit SE3 verbunden ist, aufweisen, auf die Applikationen zum Steuern der Bahnanwendung in Form von Applikationsprogrammen AP1 ... AP5 (hierzu im Folgenden noch mehr) verteilt sind. Der erste Hostrechner HR1 wird durch ein Rechenzentrum RZ zur Verfügung gestellt und ist über eine erste Schnittstelle S1 mit einer ersten Speichereinheit SE1 verbunden. Das Rechenzentrum RZ kann beispielsweise durch einen Dienstleister des Bahnbetreibers oder durch den Bahnbetreiber selbst betrieben werden. Über eine zweite Schnittstelle S2 ist der erste Hostrechner HR1 mit einer privaten Cloud CLD verbunden, sodass dieser örtlich nicht an die Bahnanwendung gebunden ist. Bei der Cloud CLD kann es sich um eine private Cloud CLD handeln, wobei darunter eine Cloud CLD zu verstehen ist, bei der der Zugriff auf autorisierte Nutzer beschränkt ist und das nach außen hin, d. h. gegen nicht autorisierte Nutzer, abgeschottet ist.

Eine Leitzentrale LZ des Bahnbetreibers beherbergt den zweiten Hostrechner HR2, der über eine dritte Schnittstelle S3 ebenfalls mit der Cloud CLD verbunden ist. Außerdem ist der zweite Hostrechner HR2 über eine vierte Schnittstelle S4 mit einer zweiten Speichereinheit SE2 verbunden.

Die Rechenumgebung RU weist außerdem exemplarisch ein Stellwerk STW auf, welches den dritten Hostrechner HR3 beherbergt, der über eine sechste Schnittstelle S6 mit einer dritten Speichereinheit SE3 verbunden ist. Außerdem weist der dritte Hostrechner HR3 eine fünfte Schnittstelle S5 zum zweiten Hostrechner HR2 auf. In nicht dargestellter Weise könnte der dritte Hostrechner HR3 auch mit der Cloud CLD verbunden sein. Der dritte Hostrechner HR3 weist außerdem eine siebte Schnittstelle S7 zum Weichenantrieb WA, eine achte Schnittstelle S8 zu dem Controller CL und eine neunte Schnittstelle S9 zu der Balise BL auf.

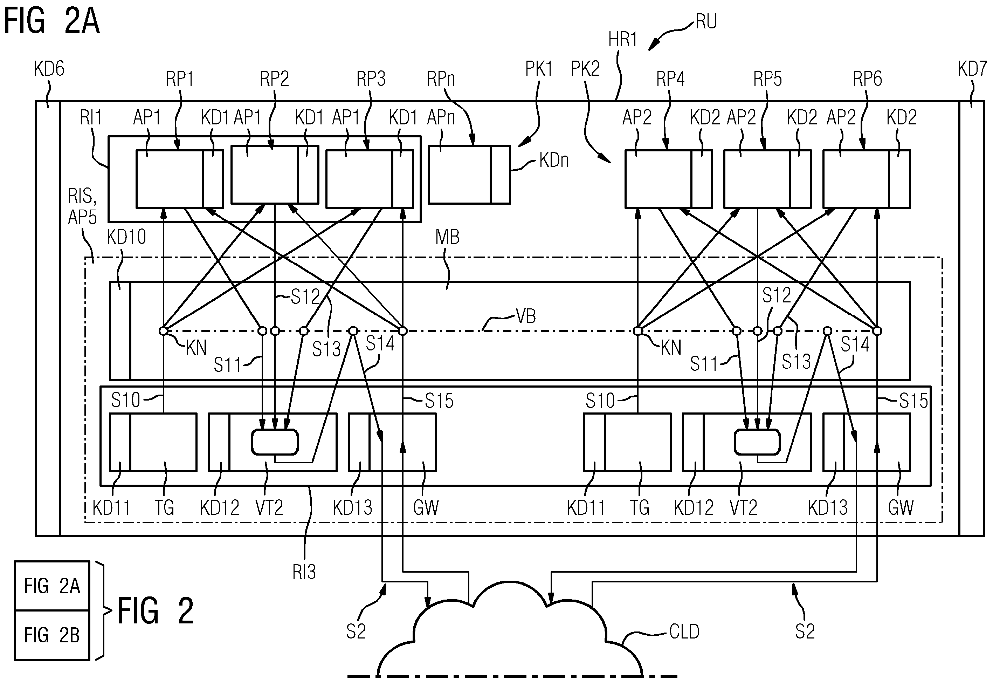

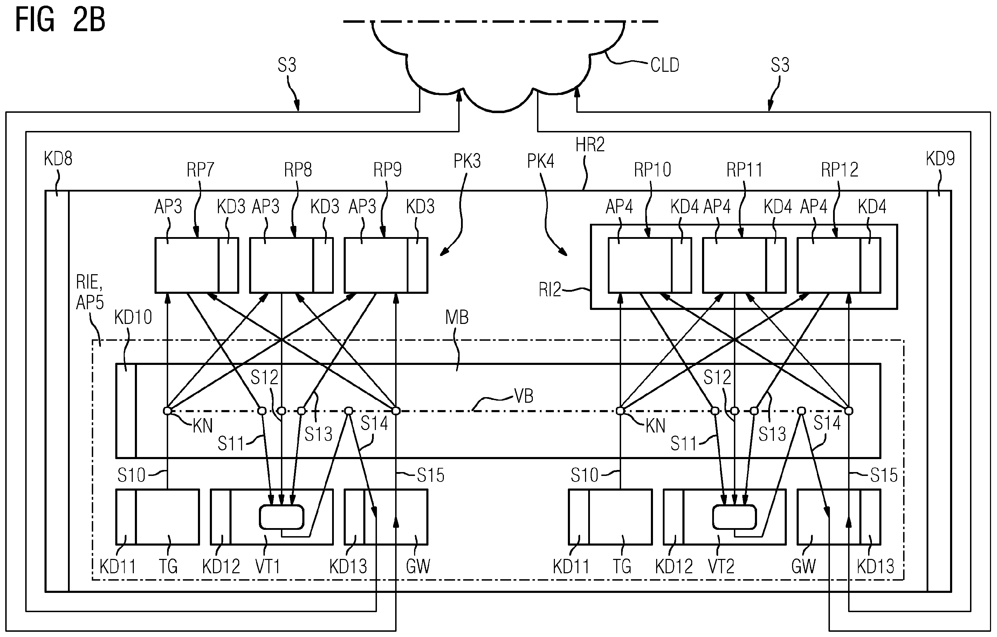

Alle Schnittstellen S1 ... S9 gemäß Figur 1 sind grundsätzlich kabelgebunden oder auch durch eine kabellose Übertragungstechnik, beispielsweise Funk, realisierbar. Die Anordnung der Hostrechner HR1 ... HR3 ist lediglich exemplarisch und kann bei komplexeren Bahnanlagen beliebig erweitert werden. Eine Rechenumgebung wird dadurch definiert, dass die beteiligten Hostrechner HR1 ... HR3 untereinander kommunizieren können und dadurch die Applikationen unter Berücksichtigung verfügbarer Rechenkapazitäten verteilt auf den Hostrechnern HR1 ... HR3 abgearbeitet werden können. Hierzu werden nicht näher dargestellte Recheninstanzen gebildet, die im Folgenden noch näher beschrieben werden (vergleiche Figur 2, wo zum Beispiel replizierende Recheninstanzen RP1 ... RPn und Recheninstanzen RI1 ... RI3 sowie RIS und RIE dargestellt sind).

Figur 2 stellt die Konfiguration des ersten Hostrechners HR1 und des zweiten Hostrechners HR2 gemäß Figur 1 exemplarisch dar. Die Einbindung weiterer Hostrechner kann analog erfolgen. Die Hostrechner sind so organisiert, dass zur Bewältigung bestimmte Aufgabenkomplexe in Form von Programmkomplexen PK1 ... PK4 auf den Hostrechnern organisiert werden, welche aus einzelnen Applikationsprogrammen AP1 ... AP5 bestehen.

Ein erstes Applikationsprogramm AP1, ein zweites Applikationsprogramm AP2 ein drittes Applikationsprogramm AP3 und ein viertes Applikationsprogramm AP4 sind für die Abarbeitung von Bahnapplikationen, wie in Figur 1 dargestellt, vorgesehen und sind somit Nutzprogramme. Diese können in den Programmkomplexen zeitlich parallel redundant ablaufen und sind in Figur 2 daher in den einzelnen Programmkomplexen mehrfach vorgesehen, so dass eine Nachricht im Rahmen der Abarbeitung einer Applikation mehrfach erzeugt werden kann und daher in einer Vielzahl N von Applikationsdatensätzen enthalten (d. h. von diesen repräsentiert) sein kann.

Als Konfigurationsdaten KD1 ... KD13 sollen Daten verstanden werden, welche Applikationsprogramme AP1 ... AP5 für die individuellen Anforderungen des vorliegenden Anwendungsfalls konfigurieren. Die Konfiguration definiert das Zusammenspiel verschiedener Applikationsprogramme AP1 ... AP5 untereinander sowie die Funktion der Applikationsprogramme AP1 ... AP5 auf den Hardwarekomponenten (zum Beispiel den Hostrechnern HR1 ... HR2), auf denen diese installiert sind. Außerdem enthält die Konfiguration Anpassungen auf den vorliegenden Anwendungsfall, für welchen das betreffende Applikationsprogramm gedacht ist (beispielsweise Parameter, die sich in verschiedenen Anwendungsfällen unterscheiden können). Im Zusammenhang mit der Erstellung von Programmkomplexen PK1 ... PK4, Applikationsprogrammen AP1 ... AP5 und Teilprogrammen TG, VT1, VT2, GW, MB soll angemerkt werden, dass jeweils den Programmkomplexen PK1 ... PK4, den Applikationsprogrammen AP1 ... AP5 sowie den Teilprogrammen TG, VT1, VT2, GW, MB jeweils Konfigurationsdaten KD1 ... KD13 zugeordnet werden können.

Anhand des fünften Applikationsprogramms AP5 ist außerdem gezeigt, dass dieses durch einzelne Teilprogramme TG, VT1, VT2, GW, MB realisiert werden kann. Die Teilprogramme TG, VT1, VT2, GW, MB des fünften Applikationsprogramms AP5 sind Gateways GW, Voter VT1, VT2, Taktgeber TG und Message Broker MB (hierzu im Folgenden noch mehr). Dies ist aber nur als Beispiel zu verstehen, wie der erfindungsgemäß zum Einsatz kommende Voter VT1, VT2 softwaretechnisch realisiert und in eine funktionale Umgebung eingebunden werden kann. Alternativ könnte zum Beispiel der Taktgeber TG (oder ein anderes Teilprogramm) in einer anderen (nicht sicheren) Applikation laufen, während die restlichen Teilprogramme TG, VT1, VT2, GW, MB wie beschrieben in dem (sicheren) fünften Applikationsprogramm AP5 laufen.

Als Teilprogramme TG, VT1, VT2, GW, MB im Sinne der Erfindung sind allgemein kleinere Einheiten wie zum Beispiel Programmmodule zu verstehen, deren Gesamtheit das Applikationsprogramm ergeben. Somit ist es vorteilhaft möglich, Applikationsprogramme AP1 ... AP5 modular aufzubauen, wobei die Module in mehreren Applikationsprogrammen AP1 ... AP5 zum Einsatz kommen. Dabei können die Teilprogramme TG, VT1, VT2, GW, MB abhängig von ihrem Einsatz mit unterschiedlichen Konfigurationsdaten KD1 ... KD13 konfiguriert werden. Teilprogramme TG, VT1, VT2, GW, MB machen es somit möglich, Applikationsprogramme AP1 ... AP5 einfacher erstellen zu können und damit die Rechenumgebung einfacher an einen Anwendungsfall anpassen zu können.

Das fünfte Applikationsprogramm AP5 ist in beiden Hostrechnern HR1 ... HR2 für alle Programmkomplexe PK1 ... PK4 gleich organisiert. Über den Gateway GW können Nachrichten mit der privaten Cloud CLD ausgetauscht werden. Daher bildet der Gateway GW die zweite Schnittstelle S2 und die dritte Schnittstelle S3 gemäß Figur 1 aus. Über den Message Broker MB werden die Nachrichten innerhalb des Hostrechners verteilt, vorzugsweise nach dem Publish-Subscribe-Verfahren. Der Gateway GW nutzt beispielsweise eine fünfzehnte Schnittstelle S15, um empfangene Nachrichten replizierenden Recheninstanzen RP1 ... RP12 über den Message Broker MB zur Verfügung zu stellen. Diese werden dann durch die replizierenden Recheninstanzen RP1 ... RP12 abgerufen. Die Verteilung ist durch Knoten KN angedeutet, welche in der fünfzehnte Schnittstelle S15 (und ebenfalls in den weiteren, im Folgenden noch beschriebenen Schnittstellen S10 ... S14) angedeutet sind.

In Figur 2 sind der Übersichtlichkeit halber die Programmkomplexe PK1 ... PK4 jeweils vollständig in einem der Hostrechner HR1 ... HR2 realisiert. In der Realität können Programmkomplexe PK1 ... PK4 mit ihren Applikationsprogrammen AP1 ... AP5 und deren Teilprogrammen TG, VT1, VT2, GW, MB auch auf mehreren Hostrechnern verteilt ablaufen (nicht dargestellt). Dies ermöglicht es vorteilhaft, Kapazitäten von Hostrechnern zu nutzen, wenn diese für die Konfiguration eines ganzen Programmkomplexes nicht ausreichend Kapazität zur Verfügung stellen, indem die Kapazität von mehreren Hostrechnern für den betreffenden Programmkomplex gemeinsam genutzt wird.

Die Programmkomplexe PK1 ... PK4 können beispielsweise für einen bestimmten Aufgabenkomplex vorgesehen werden. Beispielsweise kann ein Programmkomplex zur Ansteuerung einer bestimmten Bahnkomponente (Lichtsignal LS, Stellwerk STW, Weiche WH, Balise BL, Achszähler usw.) Verwendung finden. Für die Ansteuerung dieser Bahnkomponente sind im Allgemeinen mehrere Applikationsprogramme AP1 ... AP4 erforderlich. Insbesondere wird auch das bereits vorstehend erläuterte fünfte Applikationsprogramm AP5 benötigt, um eine sichere Ausführung der Applikation sowie Kommunikation mit anderen Programmkomplexen PK1 ... PK4 oder Hostrechnern zu gewährleisten. Dieses ist als Dienstprogramm zu bezeichnen, welches einer Sicherung der Funktion des Hostrechners dient und damit eine den Hostrechner betreffende Applikation ausführt (im Gegensatz zu den Nutzdaten für Bahnkomponenten verarbeitenden Applikationsprogrammen AP1 ... AP5 die somit als Nutzprogramme bezeichnet werden). Das fünfte Applikationsprogramm AP5 läuft ebenfalls in mindestens einer Recheninstanz pro Hostrechner ab.

Als eine Vielzahl redundanter Recheninstanzen im Sinne der Erfindung wird eine Softwareimplementierung auf den Hostrechnern HR1 ... HR2 verstanden, die eine parallele, sprich gleichzeitige Abarbeitung von Applikationsprogrammen AP1 ... AP4, vorzugsweise innerhalb des jeweiligen Programmkomplexes erlauben. In Figur 2 dargestellt sind Programmkomplexe PK1 ... PK4 mit je drei replizierenden Recheninstanzen (beispielsweise RP1, RP2 und RP3), um ein redundantes 2oo3-System zu bilden, es sind aber auch mehr replizierende Recheninstanzen RP1 ... RPn, wie exemplarisch für den ersten Programmkomplex PK1 dargestellt, denkbar. Im Folgenden wird das Verfahren zur Abarbeitung der Applikationsprogramme AP1 ... AP5 anhand des ersten der Programmkomplexe PK1 ... PK4 für die erste replizierende Recheninstanz RP1, die zweite replizierende Recheninstanz RP2 ... und die dritte replizierende Replizierende Recheninstanz RP3 zur Abarbeitung des ersten Applikationsprogramms AP1 erläutert. Für die Programmkomplexe PK2 ... PK4 läuft die Abarbeitung aber entsprechend ab, sodass diese nicht gesondert erläutert werden muss.

In der ersten replizierenden Recheninstanz RP1 bis dritten replizierenden Recheninstanz RP3 wird das erste Applikationsprogramm AP1 redundant, also zeitgleich parallel, abgearbeitet. Hierbei handelt es sich um ein Applikationsprogramm, welches eine Aufgabe für die Bahnanwendung gemäß Figur 1 übernimmt. Beispielsweise kann das erste Applikationsprogramm AP1 allgemein zur Ansteuerung von Lichtsignalen LS dienen, wobei die ersten Konfigurationsdaten KD1 die Anwendung des ersten Applikationsprogramms AP1 auf das Lichtsignal LS gemäß Figur 1 gewährleisten. Hierbei muss beispielsweise eine Kommunikation mit dem Controller CL gemäß Figur 1 sichergestellt werden. Konfigurationsdaten KD1 ... KD13 stehen auch für alle anderen Programmkomplexe PK1 ... PK4, Applikationsprogramme AP1 ... AP5 sowie Teilprogramme TG, VT1, VT2, GW, MB zur Verfügung. Entsprechend enthalten die Konfigurationsdaten KD1 ... KD13 die jeweils für die Programmkomplexe PK1 ... PK4, Applikationsprogramme AP1 ... AP5 und Teilprogramme TG, VT1, VT2, GW, MB erforderlichen Daten, damit diese die ihnen zugewiesenen Aufgaben im betreffenden Anwendungsfall übernehmen können. Dabei sind die Konfigurationsdaten KD1 ... KD13 jeweils unveränderlich und können daher in einem Datenabschnitt DA mit bekanntem Anfang und bekanntem Ende abgespeichert werden. Ebenso werden alle Programmkomplexe PK1 ... PK4, Applikationsprogramme AP1 ... AP5 sowie Teilprogramme TG, VT1, VT2, GW, MB als Datenabschnitte DA mit bekanntem Anfang und bekanntem Ende abgespeichert. Hierfür stehen beispielsweise die erste Speichereinheit SE1, die zweite Speichereinheit SE2 sowie die dritte Speichereinheit SE3 gemäß Figur 1 zur Verfügung.

Daten, die sich während der Abarbeitung von Programmen verändern, werden zwischen den beteiligten Partnern als Nachrichten ausgetauscht. Hierfür steht, wie bereits erwähnt, der Message Broker MB zur Verfügung. Außerdem kommunizieren die einzelnen Hostrechner HR1, HR2 über die externen Schnittstellen S2, S3 beispielsweise mittels der privaten Cloud CLD untereinander, damit Daten auch zwischen verschiedenen Programmkomplexen PK1 ... PK4 verschiedener Hostrechner ausgetauscht werden können.

Die Abläufe in der Bahnanwendung gemäß Figur 1 sind sicherheitsrelevant für die Betriebssicherheit der Bahnanwendung. Dies ist der Grund, warum das erste Applikationsprogramm AP1 in der ersten, zweiten und dritten replizierenden Recheninstanz RP1 ... RP3 zeitlich parallel, d. h. redundant, abgearbeitet wird. Die erste replizierende Recheninstanz RP1, die zweite replizierende Recheninstanz RP2 und die dritte Recheninstanz RP3 senden das Ergebnis bei der Abarbeitung des ersten Applikationsprogramms AP1 an den Message Broker MB, und zwar die erste replizierende Recheninstanz RP1 über eine elfte Schnittstelle S11 und die zweite replizierende Recheninstanz über eine zwölfte Schnittstelle S12 und die dritte replizierende Recheninstanz über eine dreizehnte Schnittstelle S13. Diese Ergebnisse werden über die genannten Schnittstellen von dem jeweiligen redundant als 2oo2-System arbeitenden Voter VT1, VT2 abgerufen, der ein Voting durchführt.

Damit die Berechnungsergebnisse für das Voting durch den jeweiligen Voter VT1, VT2 gleichzeitig zur Verfügung stehen, werden die Prozesse in der ersten replizierenden Recheninstanz RP1 und in der zweiten replizierenden Recheninstanz RP2 und der dritten replizierenden Recheninstanz RP3 über redundante Taktgeber TG getaktet. Diese stellen Taktsignale über zehnte Schnittstellen S10 zur Verfügung, die ebenfalls über den Message Broker MB von der ersten replizierenden Recheninstanz RP1 der zweiten replizierenden Recheninstanz RP2 und der dritten replizierenden Recheninstanz RP3 abgerufen werden können.

Die geschilderte Art der Abarbeitung von Aufgaben durch das erste Applikationsprogramm AP1 wird durch das fünfte Applikationsprogramm AP5 sichergestellt. Bei dem fünften Applikationsprogramm AP5 handelt es sich also um ein internes Applikationsprogramm, welches die Funktionsweise der Hostrechner HR1 ... HR2 unterstützt und damit ein Dienstprogramm ist. Dies macht deutlich, dass Applikationsprogramme AP1 ... AP5 nicht nur für die Applikation der Bahnanwendung gemäß Figur 1 (Nutzprogramme), sondern auch für die Abarbeitung von Applikationen in den Hostrechnern HR1 ... HR2 (Dienstprogramme) zur Verfügung gestellt werden müssen.

Die Zusammenfassung von Applikationsprogrammen AP1 ... AP5 zu Programmkomplexen PK1 ... PK4 sowie die Unterteilung von Applikationsprogrammen AP1 ... AP5 in Teilprogramme TG, VT1, VT2, GW, MB erleichtert hierbei die Zusammenstellung von Applikationsprogrammen AP1 ... AP5 sowie die Prüfung der Abarbeitung der Aufgaben auf Fehlerfreiheit.

In Figur 2 ist durch eine Verbindungslinie VB angedeutet, dass der Messagebroker MB verwendet werden kann, um Nachrichten NR potenziell über die Knoten KN nach Bedarf an alle Abonnenten zu übertragen, die eine Nachricht NR abonniert haben. Es stehen somit potenziell auch weitere Schnittstellen als die in Figur 2 dargestellten Schnittstellen S10 bis S15 für eine Übertragung zur Verfügung. Insbesondere können auch der erste Voter VT1 und der zweite Voter VT2 innerhalb einer dritten Recheninstanz RI3 miteinander kommunizieren. Hierdurch kann das erfindungsgemäß redundante Voting realisiert werden. Es wird folgendermaßen vorgegangen.

Der erste Voter VT1 empfängt in der ersten replizierenden Recheninstanz RP1, der zweiten replizierenden Recheninstanz RP2 und der dritten replizierenden Recheninstanz RP3 (alle drei in einer ersten Recheninstanz RI1 zusammengefasst) redundant erzeugte Applikationsdatensätze ADS mit derselben Nachricht NR über die elfte Schnittstelle S11, zwölfte Schnittstelle S12 und 13. Schnittstelle S13. Anschließend wird in dem ersten Voter VT1 eine Mehrheitsentscheidung durchgeführt. Über den Messagebroker MB kann auch der zweite Voter VT2 die erwähnten drei Applikationsdatensätze ADS abrufen und ein Voting redundant durchführen. Die Redundanz des Votings ist den überprüften Applikationsdatensätzen ADS jedoch nicht ohne weitere Maßnahmen anzusehen.

Daher wird eine erfolgreich gevotete Nachricht NR (deren Inhalt in einer Mehrheit der gevoteten Applikationsdatensätze ADS übereinstimmt) verschlüsselt und über die 14. Schnittstelle S14 und den Messagebroker MB an den jeweils anderen Voter (im Falle des zweiten Voters VT2 also an den ersten Voter VT1 und im Falle des ersten Voters VT1 an den zweiten Voter VT2) übertragen. Für den Fall, dass der jeweils andere Voter ebenfalls ein positives Ergebnis des Votings erzielen konnte, wird der die Nachricht enthaltende Applikationsdatensatz durch diesen Voter ein zweites Mal verschlüsselt. Die doppelt verschlüsselte Nachricht NR kann in dem Applikationsdatensatz nun über den Messagebroker MB (das den Messagebroker MB realisierende fünfte Applikationsprogramm AP5 arbeitet in diesem Falle als Sender-Recheninstanz RIS) an den Messagebroker MB des zweiten Hostrechners HR2 (das diesen Messagebroker MB realisierende fünfte Applikationsprogramm AP5 arbeitet in diesem Falle als Empfänger-Recheninstanz RIE) übertragen werden. Hierbei kommen die zweite Schnittstelle S2 und die dritte Schnittstelle S3 und die Cloud CLD gemäß Figur 2 zum Einsatz. Hierbei reicht es, wenn von den redundant erzeugten Applikationsdatensätzen ADS nur einer übertragen wird, da die Identität der durch die Applikationsdatensätze ADS repräsentierten Nachricht NR bereits festgestellt wurde.

Zur weiteren Verarbeitung des übertragenen Applikationsdatensatzes ADS muss dieser nun entschlüsselt/decodiert werden. Dies wird in der Empfänger-Recheninstanz RIE durchgeführt. Die Entschlüsselung/Decodierung gelingt allerdings nur, wenn in der Sender-Recheninstanz RIS die zweifache Verschlüsselung sowohl durch den ersten Voter VT1 als auch durch den zweiten Voter VT2 erfolgt ist. Hierdurch ist bei einer erfolgreichen Entschlüsselung/Decodierung immer sichergestellt, dass das Voting vorher redundant durchgeführt wurde und auch eine Mehrheit der Voter ein erfolgreiches Voting durchgeführt hat. Im Beispiel gemäß Figur 2 handelt es sich um ein 2oo2-System, sodass beide Voter ein übereinstimmendes Ergebnis erzeugen müssen.

Die zehnte replizierende Recheninstanz RP10, die elfte replizierende Recheninstanz RP11 und die zwölfte replizierende Recheninstanz RP12, die gemeinsam eine zweite Recheninstanz RI2 bilden, haben in dem Beispiel gemäß Figur 2 die betreffende Nachricht NR abonniert und erhalten daher von dem Messagebroker MB über die 15. Schnittstelle S15 den entschlüsselten Applikationsdatensatz ADS. Diesem lässt sich die Nachricht NR entnehmen, die durch die in den besagten replizierenden Recheninstanzen gespeicherten Applikationsprogramme weiterverarbeitet werden kann.

Gemäß Figur 3 sind der erste Hostrechner HR1, der zweite Hostrechner HR2 und der dritte Hostrechner HR3 dargestellt, die im Vergleich zum ersten Hostrechner HR1 und zweiten Hostrechner HR2 gemäß Figur 2 jedoch anders organisiert sind. In jedem der Hostrechner gemäß Figur 3 ist jeweils eine der zusammengehörigen replizierenden Recheninstanzen der ersten Recheninstanz RI1, also, wie im Beispiel dargestellt, die erste replizierende Recheninstanz RP1, die zweite replizierende Recheninstanz RP2 und die dritte replizierende Recheninstanz RP3 untergebracht. Dies ist lediglich exemplarisch dargestellt. Selbstverständlich können weitere replizierende Recheninstanzen in den Hostrechnern gemäß Figur 3 nach demselben Prinzip angeordnet sein.

Dadurch, dass die erste replizierende Recheninstanz RP1, die zweite replizierende Recheninstanz RP2 und die dritte replizierende Recheninstanz RP3 jeweils auf einem andern Hostrechner laufen, wird vorteilhaft die Gefahr, dass es zu einer gegenseitigen Beeinflussung kommt, minimiert. Dies wird durch eine hardwaretechnische Trennung bewirkt. Beispielsweise können die besagten Recheninstanzen jeweils auf einem Rechenkern eines Prozessors in jedem der Hostrechner liegen.

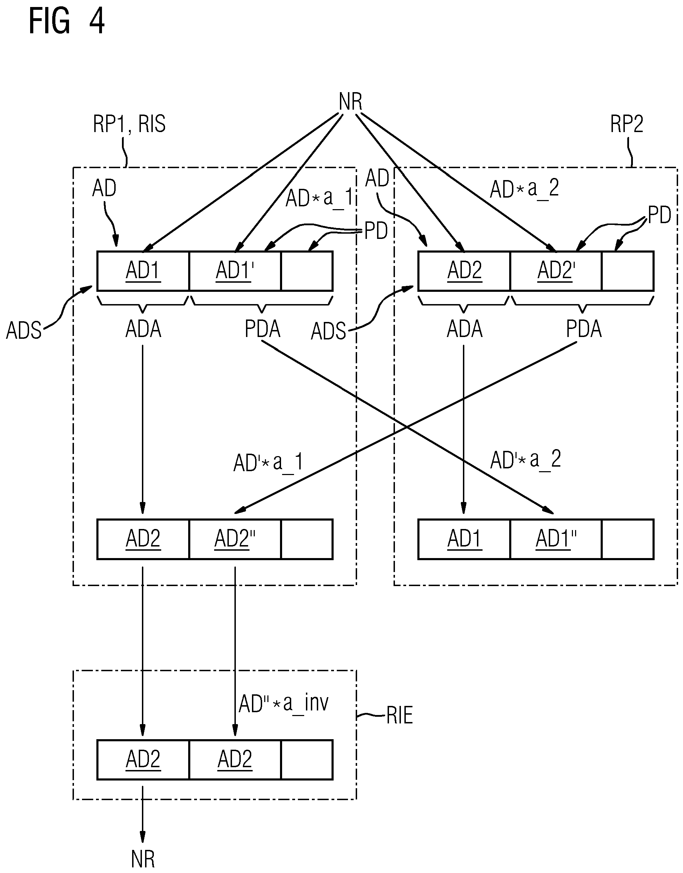

Um die redundant erzeugten Ergebnisse der ersten replizierenden Recheninstanz RP1, der zweiten replizierenden Recheninstanz RP2 und der dritten replizierenden Recheninstanz RP3 in Form von Applikationsdatensätzen ADS (siehe Figur 4) vor einer Weiterverarbeitung auf ihre Richtigkeit hin überprüfen zu können, sind in dem ersten Hostrechner HR3 ein erster Voter VT1, in dem zweiten Hostrechner HR2 ein zweiter Voter VT2 und in dem dritten Hostrechner HR1 ein dritter Voter VT3 vorgesehen. Auch hier ergibt sich ein Unterschied zu der Funktionsweise, die für den ersten Voter VT1 und den zweiten Voter VT2 gemäß Figur 2 beschrieben wurde. Dadurch, dass drei redundante Voter zum Einsatz kommen wird nämlich ein 2oo3-System ausgebildet, welches vorteilhaft zusätzliche Funktionsredundanz zur Verfügung stellt. Dies soll im Folgenden näher erläutert werden.

In Figur 3 ist angedeutet, dass die drei Voter, also der erste Voter VT1, der zweite Voter VT2 und der dritte Voter VT3, ein sog. Team T bilden. Während dieses Team T die bereits erwähnte Funktionsredundanz als 2oo3-System gewährleisten, ist das eigentliche Voting genauso wie zu Figur 2 beschrieben als (eine Redundanzgruppe bildendes) 2oo2-System konzipiert. Dies ist durch jeweilige Kooperationslinien KL in Figur 3 angedeutet, die zeigen, dass die besagten Voter jeweils paarweise zusammenarbeiten. Hierdurch entstehen eine erste Redundanzgruppe RG1, eine zweite Redundanzgruppe RG2 und eine dritte Redundanzgruppe RG3.

Grundsätzlich ist es somit ausreichend, wenn eine der genannten Redundanzgruppen funktionsfähig ist. Denn jede der Redundanzgruppen gewährleistet ein 2oo2-System, welches die erforderliche Funktionssicherheit gewährleistet. Um anzudeuten, wie es zu Einschränkungen der Funktionen in der Rechenumgebung RU gemäß Figur 3 kommen kann, sind aber alternative Beispiele des Ausfallens von einzelnen Komponenten als Störungen angedeutet. Störungen können beispielsweise durch Ausfall von Hardwarekomponenten oder durch Absturz von Applikationsprogrammen zustande kommen.

Eine erste Störung ST1 bezieht sich auf den ersten Voter VT1. Wenn dieses Applikationsprogramm ausfällt, kann der Figur 3 leicht entnommen werden, dass der zweite Voter VT2 und der dritte Voter VT3 als 2oo2-System weiterhin für ein Voting zur Verfügung stehen und dabei die zweite Redundanzgruppe RG2 bilden. Dass alle drei Voter jeweils mit den in der ersten replizierenden Recheninstanz RP1, der zweiten replizierenden Recheninstanz RP2 und der dritten replizierenden Recheninstanz RP3 in kommunikativer Verbindung stehen, und somit unabhängig voneinander empfangen können ist durch entsprechende Verbindungslinien dargestellt, die somit die Funktion der elften Schnittstelle S11, der zwölften Schnittstelle S12 und der 13. Schnittstelle S13 übernehmen.

Eine zweite Störung ST2 ist dadurch gegeben, dass der ganze dritte Hostrechner HR1 ausfällt. In diesem Fall steht der dritte Voter VT3 nicht mehr zur Verfügung. Auch hier wird sofort deutlich, dass der erste Voter VT1 und der zweite Voter VT2 als erste Redundanzgruppen RG1 noch funktionsfähig sind. Zu bemerken ist, dass in diesem Fall auch die Applikationsdatensätze ADS ausbleiben, welche die dritte replizierende Recheninstanz RP3 berechnet. Allerdings bleibt die Rechenumgebung RU lauffähig, solange die erste replizierende Recheninstanz RP1 und die zweite replizierende Recheninstanz RP2 übereinstimmende Ergebnisse erzielen. Diese können bei einem Voting sowohl im ersten Voter VT1 als auch im zweiten Voter VT2 als Mehrheit identifiziert werden, da das Voting als 2oo3-System ausgeführt ist und somit das Ergebnis der dritten replizierenden Recheninstanz RP3 außer Betracht bleiben kann, solange die beiden anderen Recheninstanzen identische Ergebnisse erzielen. Eine Verschlüsselung der Applikationsdatensätze ADS beim Voting jeweils in der ersten Redundanzgruppe RG1, der zweiten Redundanzgruppen RG2 und der dritten Redundanzgruppe RG3 wird wie zu Figur 2 beschrieben durchgeführt.

Auch die Sender-Recheninstanz RIS und die Empfänger-Recheninstanz RIE sind in Figur 3 redundant ausgeführt. Der erste Hostrechner HR3, der zweite Hostrechner HR2 und der dritte Hostrechner HR1 weisen jeweils eine Sender-Recheninstanz RIS auf, wobei diese über 18. Schnittstellen S18 miteinander kommunizieren. Diese können die gevotete Nachricht NR jeweils über eine siebzehnte Schnittstellen S17 empfangen. Ein vierter Hostrechner, ein fünfter Hostrechner und ein sechster Hostrechner weisen jeweils eine Empfänger-Recheninstanz RIE auf, die über 20. Schnittstellen S20 miteinander verbunden sind. Auch für die Übertragung eines erfolgreich gevoteten Applikationsdatensatzes ADS über eine 19. Schnittstelle S19 ist also nicht davon abhängig, ob einer der Hostrechner ausfällt. Nach einer Entschlüsselung, wie zu Figur 2 beschrieben, wird der empfangene Applikationsdatensatz ADS über Schnittstellen 21 dann der zehnten replizierenden Recheninstanz RP10, der elften replizierenden Recheninstanz RP11 und der zwölften replizierenden Recheninstanz RP12, welche zusammen die zweite Recheninstanz RI2 ausbilden, übertragen.

In Figur 4 ist dargestellt, wie eine Nachricht NR, repräsentiert durch Applikationsdatensätze ADS mit ersten Applikationsdaten AD1 und zweiten Applikationsdaten AD2, jeweils berechnet in einer ersten replizierenden Recheninstanz RP1 und der zweiten replizierenden Recheninstanz RP2 verschlüsselt werden kann. Die Applikationsdatensätze ADS sind gemäß Figur 4 als Balken dargestellt. Diese weisen jeweils einen Applikationsdatenabschnitt ADA und einen Prüfdatenabschnitt PDA auf. In dem Applikationsdatenabschnitt ADA sind die Applikationsdaten AD abgelegt und in dem Prüfdatenabschnitt PDA die Prüfdaten PD. In dem Beispiel gemäß Figur 4 bestehen die Prüfdaten PD aus verschlüsselten Applikationsdaten AD, welche durch einen Strich bzw. zwei Striche (je nachdem wie oft diese verschlüsselt wurden, hierzu im Folgenden noch mehr) gekennzeichnet sind. Andere Prüfdaten PD, die ebenfalls im Prüfdatenabschnitt PDA abgelegt sein können, könnten zum Beispiel ein öffentlicher Schlüssel a_inv, Zählvariablen oder Zeitstempel sein.

In Figur 4 wird das Verschlüsseln und Entschlüsseln der Nachricht NR mittels Operatoren * einer bijektiven Abbildung dargestellt. Der Operator * ist in Figur 4 mit einem Stern gekennzeichnet und könnte beispielsweise als Multiplikation der Operanden a durchgeführt werden. Die Operanden werden mit a... bezeichnet, wobei bei dem Verfahren als Operanden ein erster Teilschlüssel a_1 und ein zweiter Teilschlüssel a_2 zum Verschlüsseln und ein öffentlicher Schlüssel a_inv zum Entschlüsseln verwendet werden.

Die Pfeile stellen in Figur 4 den Informationsfluss der Applikationsdatensätze ADS dar. Es ist zu erkennen, dass diese wechselseitig von der ersten replizierenden Recheninstanz RP1 in die zweite replizierende Recheninstanz RP2 und umgekehrt übertragen werden. Außerdem kann mindestens einer der Applikationsdatensätze ADS in die Empfänger-Recheninstanz RIE übertragen werden (dies erfolgt bei dem Beispiel gemäß Figur 4 durch die erste replizierende Recheninstanz RP1, könnte jedoch in nicht dargestellter Weise auch allein oder zusätzlich durch die zweite replizierende Recheninstanz RP2 erledigt werden). Die Rechenoperationen zum Verschlüsseln und Entschlüsseln, die auf die Applikationsdatensätze ADS angewendet werden, sind jeweils an die Pfeile geschrieben.

Der Informationsfluss kann wie folgt erläutert werden. Eine Nachricht NR wird außerhalb der ersten replizierenden Recheninstanz RP1 und zweiten replizierenden Recheninstanz RP2 redundant erzeugt. Diese Nachricht NR wird in die erste replizierende Recheninstanz RP1 in Form eines Applikationsdatensatzes ADS mit ersten Applikationsdaten AD1 sowie in die zweite replizierende Recheninstanz RP2 in Form eines Applikationsdatensatzes ADS mit zweiten Applikationsdaten AD2 übertragen, wobei die ersten Applikationsdaten AD1 und die zweiten Applikationsdaten AD2 im Normalfall (wenn kein Fehler vorliegt) identisch sind und die Nachricht NR wiedergeben. In der ersten replizierenden Recheninstanz RP1 werden die Applikationsdaten AD außerdem mithilfe des ersten Teilschlüssels a_1 verschlüsselt und in der zweiten replizierenden Recheninstanz RP2 mit dem zweiten Teilschlüssel a_2. Anschließend wird der jeweils Applikationsdatensatz ADS mit den einfach verschlüsselten zweiten Applikationsdaten AD2' in die erste replizierende Recheninstanz RP1 übergeben und der Applikationsdatensatz ADS mit den ersten einfach verschlüsselten Applikationsdaten AD1' in die zweite replizierende Recheninstanz RP2. Hier wird die Verschlüsselung wiederholt, indem der nun jeweils vorliegende Applikationsdatensatz ADS wiederum mit dem verfügbaren Teilschlüssel verschlüsselt wird, also die verschlüsselten zweiten Applikationsdaten AD2' mit dem ersten Teilschlüssel a_1 und die verschlüsselten ersten Applikationsdaten AD1' mit dem zweiten Teilschlüssel a_2. Zumindest eine dieser beiden Applikationsdatensätze ADS mit den zweifach verschlüsselten Applikationsdaten AD1'' oder AD2'' im Prüfdatenabschnitt PD kann nun in die Empfänger-Recheninstanz RIE übertragen werden. Im Beispiel gemäß Figur 4 ist das der Applikationsdatensatz ADS mit den zweiten Applikationsdaten AD2". Auf diese zweiten Applikationsdaten AD2'' wird nun der öffentliche Schlüssel a_inv angewendet, was zu einer Entschlüsselung der zweifach verschlüsselten zweiten Applikationsdaten AD2'' führt, allerdings nur, wenn vorher beide Teilschlüssel a_1 und a_2 auf die zweiten Applikationsdaten AD2 angewendet wurden. Wenn die Verschlüsselung nur durch einen der beiden Teilschlüssel erfolgt ist, kann nicht mit Sicherheit festgestellt werden, dass die erste replizierenden Recheninstanz RP1 und die zweite replizierende Recheninstanz RP2 redundant gearbeitet haben und es wird wegen der fehlgeschlagenen Entschlüsselung ein Fehler ausgegeben. Sonst (wenn kein Fehler festgestellt wurde) sind die zweiten Applikationsdaten AD2 sowohl im Applikationsdatenabschnitt ADA wie auch im Prüfdatenabschnitt PDA verfügbar. Diese können miteinander verglichen werden, um die Integrität der Nachricht NR, verkörpert durch den übermittelten Applikationsdatensatz ADS festzustellen. Diese kann anschließend außerhalb des in Figur 4 dargestellten Systems weiterverarbeitet werden.

In an sich bekannter Weise können die Applikationsdaten AD im Applikationsdatenabschnitt ADA ebenfalls verschlüsselt werden, auch wenn dies in Figur 4 nicht dargestellt ist. Hierfür können bekannte Verschlüsselungsverfahren angewendet werden, die an dieser Stelle nicht näher erläutert werden müssen. Auch können die Applikationsdaten AD im Prüfdatenabschnitt PDA codiert werden, beispielsweise kann hier eine Prüfsumme abgelegt werden. Ausschlaggebend ist allerdings, dass die Verschlüsselung der Applikationsdaten AD in der Empfänger-Recheninstanz RIE wieder entschlüsselt werden können. Durch die letztgenannte Maßnahme kann eine Übertragung zur Empfänger Recheninstanz zusätzlich abgesichert werden, wenn diese auf potenziell unsicheren Übertragungswegen erfolgt.

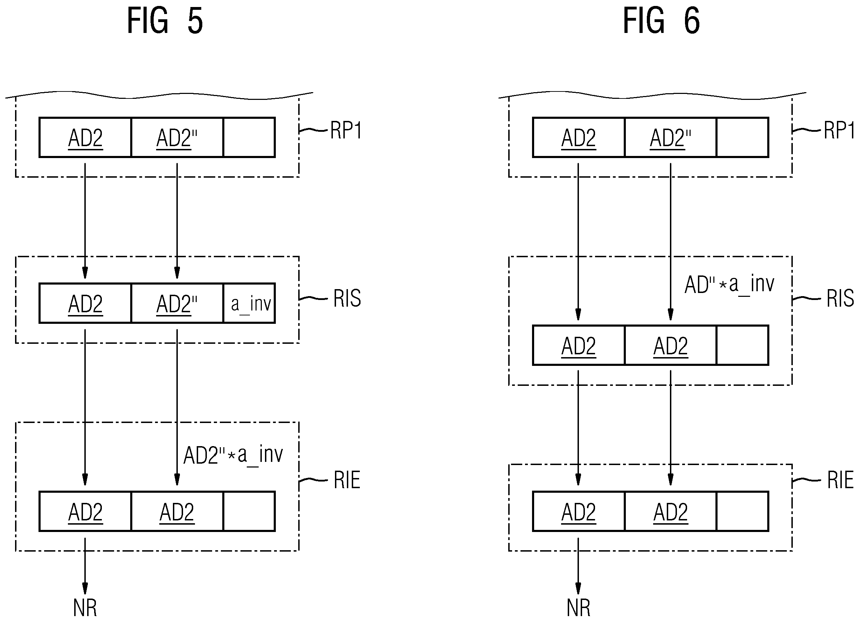

in Figur 4 ist die erste replizierende Recheninstanz RP1 für das Übertragen des Applikationsdatensatzes ADS an die Empfänger-Recheninstanz RIE verantwortlich. Diese wird mit anderen Worten als Sender-Recheninstanz RIS verwendet. In den Figuren 5 und 6 sind alternative Übertragungsverfahren dargestellt. Bei diesen Beispielen kommt zur Übertragung eine von der ersten replizierenden Recheninstanz RP1 unabhängige Sender-Recheninstanz RIS zum Einsatz. Die Erzeugung der Applikationsdatensätze ADS mit den doppelt verschlüsselten Applikationsdaten AD" im Prüfdatenabschnitt PDA erfolgt zunächst in gleicher Weise, wie gemäß Figur 4 beschrieben. Ein Unterschied zu dem Verfahren gemäß Figur 4 liegt aber darin, dass der öffentliche Schlüssel a_inv in der Empfänger-Recheninstanz RIE nicht bekannt ist. Dies verbessert die Absicherung des Verfahrens, da der Zugriff auf den öffentlichen Schlüssel a_inv begrenzt werden kann.

Gemäß Figur 5 wird der öffentliche Schlüssel a_inv zusammen mit dem betreffenden Applikationsdatensatz ADS im Prüfdatenabschnitt PDA oder gesondert (nicht dargestellt) an die Empfänger-Recheninstanz RIE übertragen. Um dies zu gewährleisten, verfügt die Sender-Recheninstanz über diesen Schlüssel, während dieser in der Empfänger-Recheninstanz RIE nicht verfügbar ist. Hierdurch kann sichergestellt werden, dass die Empfänger-Recheninstanz RIE den Applikationsdatensatz ADS nur entschlüsseln kann, wenn eine ordnungsgemäße Übertragung und Erzeugung des Applikationsdatensatzes ADS stattgefunden hat.

Gemäß Figur 6 ist der öffentliche Schlüssel a_inv nur in der Sender-Recheninstanz RIS verfügbar. Die Applikationsdaten AD" werden bei dieser Variante bereits in der Sender-Recheninstanz RIS wieder entschlüsselt, um festzustellen, dass die erste replizierende Recheninstanz RP1 ordnungsgemäß gearbeitet hat. Die Übertragung an die Empfänger-Recheninstanz RIE erfolgt dann bereits unverschlüsselt. Diese Variante sichert den Zugriff auf den öffentlichen Schlüssel a_inv noch weiter ab. Diese Variante kann gewählt werden, wenn die Übertragungswege zwischen der Sender-Recheninstanz RIS und der Empfänger-Recheninstanz RIE selbst sicher sind.

### Bezugszeichenliste

- *: Operator
- a: Operand
- a_1: erster Teilschlüssel
- a_2: zweiter Teilschlüssel
- a_inv: öffentlicher Schlüssel
- AD: Applikationsdaten
- AD1: erste Applikationsdaten
- AD2: zweite Applikationsdaten
- ADA: Applikationsdatenabschnitt
- ADS: Applikationsdatensatz
- AP1 ... AP5: erstes ... fünftes Applikationsprogramm
- AT: Antennen
- BL: Balise
- CL: Controller
- CLD: Cloud
- DA: Datenabschnitt
- FR: Fahrtrichtung
- FZ: Fahrzeug
- G: Gruppe
- GL: Gleis
- GR: Gruppe
- GW: Gateway
- HR1 ... HR3: erster ... dritter Hostrechner
- KD1... KD13: erste ... 13. Konfigurationsdaten
- KL: Kooperationslinien
- KN: Knoten
- LS: Lichtsignal
- LZ: Leitzentrale
- MB: Message Broker
- NR: Nachricht
- PD: Prüfdaten
- PDA: Prüfdatenabschnitt
- PK1 ...PK4: erster ... vierter Programmkomplex
- PR1 ... PR3: Prozessor
- RD: Redundanzdaten
- RG1 ... RG3: erste ... dritte Redundanzgruppe
- RI1 ... RI3: erste ... dritte Recheninstanz
- RIE: Empfänger-Recheninstanz
- RIS: Sender-Recheninstanz
- RP1 ... RPn: erste ... n-te replizieren Recheninstanz
- RU: Rechenumgebung
- RZ: Rechenzentrum
- S1 ... S15: erste ... fünfzehnte Schnittstelle
- SE1 ... SE3: erste ... dritte Speichereinheit
- ST1: erste Störung
- ST2: zweite Störung
- STL: Satellit
- STW: Stellwerk
- T: Team
- TG: Taktgeber
- TG, GW, MB: Teilprogramme
- VB: Verbindungslinie
- VT1 ... VT3: erster ... dritter Voter
- WA: Weichenantrieb
- WH: Weiche

## Patentansprüche

1. Verfahren zum redundanten Erzeugen und Übertragen einer Nachricht (NR), bei dem
a) die Nachricht (NR) nach dem redundanten Erzeugen durch mindestens eine erste replizierende Recheninstanz (RP1) und eine zweite replizierende Recheninstanz (RP2) von einer Sender-Recheninstanz (RIS) zumindest teilweise verschlüsselt an eine Empfänger-Recheninstanz (RIE) übergeben wird,
b)
die Nachricht (NR) in der Empfänger-Recheninstanz (RIE) entschlüsselt wird,
**dadurch gekennzeichnet, dass**
c) die Nachricht (NR) mit einem Operator (*) einer bijektiven Abbildung verschlüsselt wird, wobei zum Verschlüsseln Verschlüsselungsoperanden verwendet werden,
d) in der ersten replizierenden Recheninstanz (RP1) und der zweiten replizierenden Recheninstanz (RP2) jeweils ein anderer Verschlüsselungsoperand verwendet wird, wobei die jeweils andere replizierende Recheninstanz keinen Zugriff auf den in der betreffenden replizierenden Recheninstanz verwendeten Verschlüsselungsoperanden hat,
e) die erste replizierende Recheninstanz (RP1) und die zweite replizierende Recheninstanz (RP2) jeweils die unverschlüsselte Nachricht (NR) unter Verwendung des in der betreffenden replizierenden Recheninstanz verfügbaren Verschlüsselungsoperanden verschlüsseln und die verschlüsselte Nachricht (NR) beschreibende Prüfdaten (PD) an die jeweils andere replizierende Recheninstanz übergeben,
f) die erste replizierende Recheninstanz (RP1) und die zweite replizierende Recheninstanz (RP2) jeweils die empfangenen verschlüsselten Prüfdaten (PD) unter Verwendung des in der betreffenden replizierenden Recheninstanz verfügbaren Verschlüsselungsoperanden ein weiteres Mal verschlüsseln und zumindest eine der beiden replizierenden Recheninstanzen die doppelt verschlüsselten Prüfdaten (PD) an die Empfänger-Recheninstanz (RIE) überträgt,
g) in der Empfänger-Recheninstanz (RIE) gemäß Merkmal b) die doppelt verschlüsselten Prüfdaten unter Verwendung eines Entschlüsselungsoperanden, der einen inversen Verschlüsselungsoperanden zu einem Verknüpfungsergebnis aus den beiden verwendeten Verschlüsselungsoperanden bildet, entschlüsselt werden.

2. Verfahren nach Anspruch 1, **dadurch gekennzeichnet, dass**
im Schritt c) gemäß Anspruch 1 die zur Verschlüsselung verwendeten Verschlüsselungsoperanden die Eigenschaft haben, dass diese Gruppenelemente (G) einer Gruppe (G) bilden,
im Schritt d) gemäß Anspruch 1
in der ersten replizierenden Recheninstanz (RP1) und der zweiten replizierenden Recheninstanz (RP2) jeweils ein anderes Gruppenelement (G) und nicht das neutrale Gruppenelement (G) verwendet wird, wobei das Verknüpfungsergebnis der Verknüpfung der verwendeten Gruppenelemente (G) ebenfalls ein Gruppenelement (G) der Gruppe (G) bildet, im Schritt e) gemäß Anspruch 1
die erste replizierende Recheninstanz (RP1) und die zweite replizierende Recheninstanz (RP2) jeweils die unverschlüsselte Prüfdaten (PD) unter Verwendung des in der betreffenden replizierenden Recheninstanz verfügbaren Gruppenelementes (G) verschlüsseln,
im Schritt f) gemäß Anspruch 1
die erste replizierende Recheninstanz (RP1) und die zweite replizierende Recheninstanz (RP2) jeweils die empfangenen Prüfdaten (PD) unter Verwendung des in der betreffenden replizierenden Recheninstanz verfügbaren Gruppenelementes (G) ein weiteres Mal verschlüsseln,
im Schritt g) gemäß Anspruch 1
in der Empfänger-Recheninstanz (RIE) gemäß Merkmal b) die doppelt verschlüsselten Prüfdaten (PD) unter Verwendung eines gemeinsamen Entschlüsselungsoperanden, der ein inverses Gruppenelement (G) zu dem besagten Verknüpfungsergebnis bildet, entschlüsselt werden.

3. Verfahren nach Anspruch 1, **dadurch gekennzeichnet, dass** die Verknüpfung der Verschlüsselungsoperanden nach Merkmal e) und f) gemäß Anspruch 1 mit demjenigen Operator (*) erfolgt, der auch für die Verschlüsselung der Nachricht (NR) verwendet wird.

4. Verfahren nach einem der voranstehenden Ansprüche, **dadurch gekennzeichnet, dass** die Nachricht (NR) in einem Applikationsdatensatz (ADS) enthalten ist, wobei dieser
h) Applikationsdaten (AD), die die Nachricht (NR) in einem Applikationsdatenabschnitt (ADA) repräsentieren, und
i) Prüfdaten (PD), die einen Prüfdatenabschnitt (PDA) mit den Prüfdaten (PD) bilden, aufweist und wobei
j) das Verschlüsseln in den Schritten c), d), e) und f) gemäß Anspruch 1 und das Entschlüsseln in dem Schritt g) gemäß Anspruch 1 auf die Prüfdaten (PD) angewendet wird, wobei der Applikationsdatensatz (ADS) nur in dem Fall für eine weitere Verarbeitung freigegeben wird, dass die Prüfdaten (PD) mit der Nachricht (NR) korrelieren.

5. Verfahren nach Anspruch 4, **dadurch gekennzeichnet, dass** dieses zur Überprüfung einer Vielzahl N von redundant erzeugten Applikationsdatensätzen (ADS) der Nachricht (NR) verwendet wird, wobei
k) die Nachricht (NR) durch die Applikationsdaten (AD) in jedem der N Applikationsdatensätze (ADS) repräsentiert wird,
I) die erste replizierende Recheninstanz (RP1) als erster Voter (VT1) und die zweite replizierende Recheninstanz (RP2) als zweiter Voter (VT2) ausgeführt sind, von denen jeder redundant das Voting für die Vielzahl N der Datensätze durchführt, und nur für den Fall, dass eine Mehrheit M der N Datensätze sowohl im ersten Voter (VT1) als auch im zweiten Voter (VT2) mit übereinstimmenden Applikationsdaten (AD) ermittelt werden konnte, mindestens ein Datensatz der Mehrheit M von Datensätzen an die Empfänger-Recheninstanz (RIE) übertragen wird,
m) die Schritte e), f) und g) gemäß Anspruch 1 für diejenigen Datensätze durchgeführt werden, mit denen die Nachricht (NR) gemäß dem Schritt I) das Voting durchgeführt wird.

6. Verfahren nach einem der vorhergehenden Ansprüche, **dadurch gekennzeichnet, dass** das Verfahren bei dem redundanten Übertragen zur Qualitätsbeurteilung eines von einer Zeitquelle stammenden Zeitsignals verwendet wird, wobei
n) die erste replizierende Recheninstanz (RP1) und zweite replizierende Recheninstanz (RP2) jeweils als Synchronisierungseinheit ausgeführt sind, von denen jede redundant das Zeitsignal empfängt, um die Qualität zu beurteilen,
o) die zumindest erste replizierende Recheninstanz (RP1) und zweite replizierende Recheninstanz (RP2) jeweils einen Datensatz, der die die Qualität der Zeitquelle betreffende Nachricht (NR) repräsentiert, erzeugt und mindestens eine der besagten replizierenden Recheninstanzen den durch sie erzeugten Datensatz an die Empfänger-Recheninstanz (RIE) überträgt,
p) die Schritte e), f) und g) gemäß Anspruch 1 zumindest für Datensätze durchgeführt werden, mit denen die Nachricht (NR) gemäß dem Schritt o) übertragen wird.

7. Verfahren nach einem der vorhergehenden Ansprüche, **dadurch gekennzeichnet, dass** eine Vielzahl N von replizierenden Recheninstanzen zum Einsatz kommt, wobei
q) N > 2 ist und die erste replizierende Recheninstanz (RP1) und die zweite replizierende Recheninstanz (RP2) zu den N replizierenden Recheninstanzen zählen,
r) alle Schritte, die gemäß den vorstehenden Ansprüchen jeweils in der ersten replizierenden Recheninstanz (RP1) und in der zweiten replizierenden Recheninstanz (RP2) oder durch eine dieser beiden replizierenden Recheninstanzen durchgeführt werden, analog auch durch alle möglichen weiteren Kombinationen von zwei replizierenden Recheninstanzen unter den N replizierenden Recheninstanzen durchgeführt werden.

8. Verfahren nach einem der vorhergehenden Ansprüche, **dadurch gekennzeichnet, dass** der Operator (*) durch ein XOR-Gatter realisiert ist.

9. Bahnanlage mit einer Rechenumgebung (RU) zur Steuerung von Funktionskomponenten für einen Bahnbetrieb,
**dadurch gekennzeichnet,**
**dass** die Rechenumgebung (RU) eingerichtet ist, dass das Verfahren nach einem der Ansprüche 1 - 8 auszuführen.

10. Spurgeführtes Fahrzeug mit einer Rechenumgebung (RU) zur Steuerung von Funktionskomponenten für einen Bahnbetrieb,
**dadurch gekennzeichnet,**
**dass** die Rechenumgebung (RU) eingerichtet ist, dass das Verfahren nach einem der Ansprüche 1 - 8 auszuführen.

11. ein Computerprogrammprodukt, enthaltend Programmbefehle, die durch eine Rechenumgebung (RU) ausführbar sind, derart, dass das Verfahren nach einem der Ansprüche 1 - 8 ausgeführt wird.

12. ein Computerlesbares Speichermedium, enthaltend Daten, welche als Datensätze vom Speichermedium gespeichert werden, derart, dass die Datensätze das Computerprogrammprodukt nach dem letzten voranstehenden Anspruch ausführbar machen.
